# EUROPEAN PATENT APPLICATION

(11) **EP 4 546 911 A1**
(43) Date of publication of application: **30.04.2025**
(21) Application number: 22949069.3
(22) Date of filing: 04.11.2022
(51) Int. Cl.: H04W 72/04

(54) **SCHEDULING DETERMINATION METHOD AND APPARATUS, INDICATION DETERMINATION METHOD AND APPARATUS, AND ASSOCIATION RELATIONSHIP INDICATION METHOD AND APPARATUS**

(30) Priority: 27.06.2022 WO PCT/CN2022/101654
(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/130107
(87) International publication number: WO 2024/000986

(57) **Abstract**

The present disclosure relates to a scheduling determination method and apparatus, an indication determination method and apparatus, and an association relationship indication method and apparatus. An association relationship scheduling determination method comprises: determining a relationship set corresponding to a first cell, wherein an association relationship comprises an association relationship between a value corresponding to first information and a scheduling cell identifier; determining a first value corresponding to the first information, which is received from a second cell; according to the association relationship, determining a scheduling cell identifier corresponding to the first value; and according to a relationship between the scheduling cell identifier corresponding to the first value and an identifier of the second cell, determining whether the first cell is a cell scheduled by means of MC-DCI, which is received in the second cell. According to the present disclosure, an association relationship between a value corresponding to first information which corresponds to each first cell and a scheduling cell identifier can be determined, and since the association relationship is not limited to a value corresponding to one piece of first information being associated with one scheduling cell identifier, a network device sends MC-DCI to a terminal according to a relationship set, thereby facilitating an improvement in the flexibility of scheduling a first cell by means of the MC-DCI.

## Description

### CROSS-REFERENCE TO RELATED APPLICATIONS

This application is based on and claims priority to Chinese Patent Application No. PCT/CN2022/101654, filed on June 27, 2022, the entire contents of which are hereby incorporated into this application by reference.

### TECHNICAL FILED

The present disclosure relates to the field of communications technology, and more specifically, to a method for determining scheduling, a method for determining an indication, a method for indicating an association relationship, a device for determining scheduling, a device for determining an indication, a device for indicating an association relationship, a communication device, and a computer-readable storage medium.

### BACKGROUND

In related technologies, a single Downlink Control Information (DCI) is used to schedule data for one cell only, e.g., scheduling a Physical Uplink Shared Channel (PUSCH) or Physical Downlink Shared Channel (PDSCH).

With the fragmentation of frequency resources, the demand for scheduling data for multiple cells at the same time is gradually increasing. In order to reduce overhead of the control information, data for multiple cells can be scheduled by a single DCI. However, in the scenario where multiple cells are scheduled using a single DCI, there are some technical problems.

### SUMMARY

In view of this, embodiments of the present disclosure provide a method for determining scheduling, a method for determining an indication, a method for indicating an association relationship, a device for determining scheduling, a device for determining an indication, a device for indicating an association relationship, a communication device, and a computer-readable storage medium, to address technical problems in the related art.

According to a first aspect of embodiments of the present disclosure, a method for determining scheduling is proposed to be performed by a terminal, the method including: determining a set of relationships corresponding to a first cell, wherein the set of relationships comprises an association relationship between a value corresponding to first information and a scheduling cell identity; determining a first value corresponding to the first information received from the second cell; determining a scheduling cell identity corresponding to the first value based on the association relationship; and determining, based on a relationship between the scheduling cell identity corresponding to the first value and an identity of the second cell, whether the first cell is a cell scheduled by multi-cell scheduling Downlink Control Information (MC-DCI) received in the second cell.

According to a second aspect of embodiments of the present disclosure, a method for determining an indication is proposed to be performed by a terminal, the method including: determining a set of relationships corresponding to a first cell, wherein the set of relationships comprises an association relationship between the first cell and a value corresponding to first information sent by a network device; receiving first information in a second cell and determining a first value corresponding to the first information received in the second cell; and determining, based on a relationship between the first value and the value of the first information associated with the first cell in the association relationship, whether the first cell is a cell scheduled by multi-cell scheduling Downlink Control Information (MC-DCI) received in the second cell.

According to a third aspect of embodiments of the present disclosure, a method for determining an indication is proposed to be performed by a terminal, the method including: determining a set of relationships corresponding to a first cell, wherein the set of relationships comprises an association relationship between a value of a first information field and information indicated by the first information field for the first cell; receiving multi-cell scheduling Downlink Control Information (MC-DCI) in a second cell, and determining a value of the first information field in the MC-DCI; and when the MC-DCI schedules the first cell, determining information indicated by the first information field in the MC-DCI for the first cell based on the association relationship.

According to a fourth aspect of embodiments of the present disclosure, a method for indicating an association relationship is proposed to be performed by a network device, the method including: indicating to a terminal a set of relationships corresponding to a first cell, wherein the set of relationships comprises an association relationship between a value corresponding to first information and a scheduling cell identity.

According to a fifth aspect of embodiments of the present disclosure, a method for indicating an association relationship is proposed to be performed by a network device, the method including: indicating to a terminal a set of relationships corresponding to a first cell, wherein the set of relationships comprises an association relationship between the first cell and a value corresponding to first information sent by the network device.

According to a sixth aspect of embodiments of the present disclosure, a method for indicating an association relationship is proposed to be performed by a network device, the method including: indicating to a terminal a set of relationships corresponding to a first cell, wherein the set of relationships comprises an association relationship between a value of a first information field and information indicated by the first information field for the first cell.

According to a seventh aspect of embodiments of the present disclosure, a device for determining scheduling is proposed, the device including: a processing module configured to: determine a set of relationships corresponding to a first cell, wherein the set of relationships comprises an association relationship between a value corresponding to first information and a scheduling cell identity; determine a first value corresponding to the first information received from the second cell; determine a scheduling cell identity corresponding to the first value based on the association relationship; and determine, based on a relationship between the scheduling cell identity corresponding to the first value and an identity of the second cell, whether the first cell is a cell scheduled by multi-cell scheduling Downlink Control Information (MC-DCI) received in the second cell.

According to an eighth aspect of embodiments of the present disclosure, a device for determining scheduling is proposed, the device including: a processing module configured to: determine a set of relationships corresponding to a first cell, wherein the set of relationships comprises an association relationship between the first cell and a value corresponding to first information sent by a network device; receive first information in a second cell and determine a first value corresponding to the first information received in the second cell; and determine, based on a relationship between the first value and the value of the first information associated with the first cell in the association relationship, whether the first cell is a cell scheduled by multi-cell scheduling Downlink Control Information (MC-DCI) received in the second cell.

According to a ninth aspect of embodiments of the present disclosure, a device for determining an indication is proposed, the device including: a processing module configured to determine a set of relationships corresponding to a first cell, wherein the set of relationships comprises an association relationship between a value of a first information field and information indicated by the first information field for the first cell; receive multi-cell scheduling Downlink Control Information (MC-DCI) in a second cell, and determine a value of the first information field in the MC-DCI; and when the MC-DCI schedules the first cell, determine information indicated by the first information field in the MC-DCI for the first cell based on the association relationship.

According to a tenth aspect of embodiments of the present disclosure, a device for indicating an association relationship is proposed, the device including: a sending module configured to indicate to a terminal a set of relationships corresponding to a first cell, wherein the set of relationships comprises an association relationship between a value corresponding to first information and a scheduling cell identity.

According to an eleventh aspect of embodiments of the present disclosure, a device for indicating an association relationship is proposed, the device including: a sending module configured to indicate to a terminal a set of relationships corresponding to a first cell, wherein the set of relationships comprises an association relationship between a value of a first information field and information indicated by the first information field for the first cell.

According to a twelfth aspect of embodiments of the present disclosure, a device for indicating an association relationship is proposed to be performed by a network device, the device including: a sending module configured to indicate to a terminal a set of relationships corresponding to a first cell, wherein the set of relationships comprises an association relationship between a value of a first information field and information indicated by the first information field for the first cell.

According to a thirteenth aspect of embodiments of the present disclosure, a communication device is proposed, including: a processor; and a memory for storing a computer program; wherein the computer program, when executed by the processor, causes the processor to perform the method for determining scheduling, and/or the method for determining an indication described above.

According to a fourteenth aspect of embodiments of the present disclosure, a communication device is proposed, including: a processor; and a memory for storing a computer program; wherein the computer program, when executed by the processor, causes the processor to perform the method for indicating an association relationship described above.

According to a fifteenth aspect of embodiments of the present disclosure, a computer-readable storage medium is proposed for storing a computer program which, when executed by a processor, causes the processor to perform the method for determining scheduling, and/or the steps in the method for determining an indication described above.

According to a sixteenth aspect of embodiments of the present disclosure, a computer-readable storage medium is proposed for storing a computer program which, when executed by a processor, causes the processor to perform the steps in the method for indicating an association relationship described above.

According to embodiments of the present disclosure, an association relationship between a value corresponding to first information corresponding to each first cell and a scheduling cell identity can be determined. Since the set of relationships may define correspondences between values corresponding to multiple pieces of the first information and multiple scheduling cell identities, and is not limited to a value corresponding to one piece of first information being associated with one scheduling cell identity, it is beneficial for the network device to improve the flexibility of scheduling of the first cell by the MC-DCI when it transmits the MC-DCI to the terminal according to this set of relationships.

According to embodiments of the present disclosure, an association relationship between a value of a first information field corresponding to each first cell and the information indicated by the first information field for the first cell can be determined. Thus, the terminal can determine the information indicated by the information field in the MC-DCI for each first cell according to the association relationship after receiving the MC-DCI in the second cell. Since the set of relationships is allocated and configured for each first cell, the set of relationships corresponding to each first cell may be different, which facilitates flexible adjustment of the information indicated by the MC-DCI for each first cell.

### BRIEF DESCRIPTION OF THE DRAWINGS

In order to more clearly illustrate the technical solutions in the embodiments of the present disclosure, the accompanying drawings to be used in the description of the embodiments will be briefly introduced below. It is obvious that the accompanying drawings in the following description show only some of the embodiments of the present disclosure, and that for a person of ordinary skill in the field, other accompanying drawings can be obtained based on these drawings, without any creative labor.
FIG. 1 is a schematic flowchart of a method for determining scheduling illustrated according to embodiments of the present disclosure.
FIG. 2 is a schematic flowchart of another method for determining scheduling illustrated according to embodiments of the present disclosure.
FIG. 3 is a schematic diagram of an application scenario illustrated according to embodiments of the present disclosure.
FIG. 4 is a schematic flowchart of yet another method for determining scheduling illustrated according to embodiments of the present disclosure.
FIG. 4A is a schematic flowchart of a method for determining scheduling illustrated according to embodiments of the present disclosure.
FIG. 5 is a schematic flowchart of a method for determining an indication illustrated according to embodiments of the present disclosure.
FIG. 6A is a schematic diagram of an application scenario illustrated according to embodiments of the present disclosure.
FIG. 6B is a schematic diagram of another application scenario illustrated according to embodiments of the present disclosure.
FIG. 7 is a schematic flowchart of another method for determining scheduling illustrated according to embodiments of the present disclosure.
FIG. 8 is a schematic flowchart of a method for indicating an association relationship illustrated according to embodiments of the present disclosure.
FIG. 9 is a schematic flowchart of another method for indicating an association relationship illustrated according to embodiments of the present disclosure.
FIG. 9A is a schematic flowchart of a method for indicating an association relationship illustrated according to embodiments of the present disclosure.
FIG. 10 is a schematic flowchart of a method for indicating an association relationship illustrated according to embodiments of the present disclosure.
FIG. 11 is a schematic flowchart of another method for indicating an association relationship illustrated according to embodiments of the present disclosure.
FIG. 12 is a schematic block diagram of a device for determining scheduling illustrated according to embodiments of the present disclosure.
FIG. 12A is a schematic block diagram of a device for determining scheduling illustrated according to embodiments of the present disclosure.
FIG. 13 is a schematic block diagram of a device for determining an indication illustrated according to embodiments of the present disclosure.
FIG. 14 is a schematic block diagram of a device for indicating an association relationship illustrated according to embodiments of the present disclosure.
FIG. 14A is a schematic block diagram of a device for indicating an association relationship illustrated according to embodiments of the present disclosure.
FIG. 15 is a schematic block diagram of a device for indicating an association relationship illustrated according to embodiments of the present disclosure.
FIG. 16 is a schematic block diagram of a device for indicating an association relationship illustrated according to embodiments of the present disclosure.
FIG. 17 is a schematic block diagram of a device for determining scheduling and/or for determining an indication illustrated according to embodiments of the present disclosure.

### DETAILED DESCRIPTION

The technical solutions in the embodiments of the present disclosure will be described clearly and completely in the following in conjunction with the accompanying drawings used in the embodiments of the present disclosure. It is obvious that the described embodiments are only a part of the embodiments of the present disclosure, and not all of the embodiments. Based on the embodiments in the present disclosure, all other embodiments obtained by a person of ordinary skill in the art without any creative labor fall within the scope of protection of the present disclosure.

Terms in the present disclosure are used solely for the purpose of describing particular embodiments and are not intended to limit this disclosure. The singular forms "a/an" and "this" as used in this disclosure and the appended claims are also intended to encompass the plural forms, unless the context clearly indicates otherwise. It should also be understood that the term "and/or" as used herein refers to and encompasses any or all possible combinations of one or more of the associated listed items.

It should be understood that while the terms "first," "second," "third," etc. may be employed in embodiments of the present disclosure to describe various types of information, such information should not be limited by these terms. These terms are only used to distinguish the same type of information from one another. For example, without departing from the scope of embodiments of the present disclosure, a first cell may also be referred to as a second cell, and similarly, a second cell may be referred to as a first cell. Depending on the context, as used herein, the phrase "if" may be interpreted as "at the time of..." or "when..." or "in response to determining..."

For the purposes of brevity and ease of understanding, the terms "greater than" or "less than," and "higher than" or "lower than" are used herein when representing size relationships. However, it should be understood by those skilled in the art that the term "greater than" also encompasses the meaning of "greater than or equal to," and "less than" also encompasses the meaning of "less than or equal to". Similarly, "higher than" encompasses the meaning of "higher than or equal to," and "lower than" encompasses the meaning of "lower than or equal to."

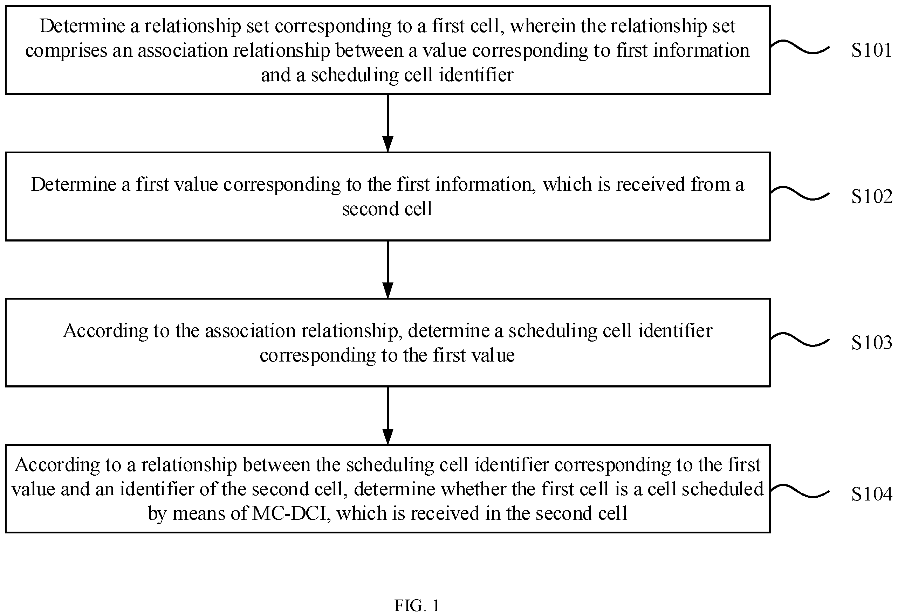

FIG. 1 is a schematic flowchart of a method for determining scheduling illustrated according to embodiments of the present disclosure. The method for determining scheduling illustrated in this embodiment may be performed by a terminal. The terminal includes, but is not limited to, a communication device such as a cell phone, a tablet, a wearable device, a sensor, an IoT device, and the like. The terminal may communicate with a network device. The network device includes, but is not limited to, a network device in a communication system such as 4G, 5G, 6G, etc. For example, it may be a base station, a core network, and the like.

As shown in FIG. 1, the method for determining scheduling may include the following steps.

Step S101, determining a set of relationships corresponding to a first cell, wherein the set of relationships includes an association relationship between a value corresponding to first information and a scheduling cell identity.

Step S102, determining a first value corresponding to the first information received from the second cell.

Step S103, determining a scheduling cell identity corresponding to the first value based on the association relationship.

Step S104, determining, based on a relationship between the scheduling cell identity corresponding to the first value and an identity of the second cell, whether the first cell is a cell scheduled by multi-cell scheduling Downlink Control Information (MC-DCI) received in the second cell.

In one embodiment, the set of relationships may include one or more association relationships. The association relationship refers to an association relationship between a value corresponding to the first information and a scheduling cell identity.

In one embodiment, after the MC-DCI for scheduling multiple cells (specifically referring to scheduling data for multiple cells) is received in the second cell, it is necessary to determine which specific cells the MC-DCI is intended to schedule. MC stands for multiple cells (Multi-cell).

In one embodiment, the first information includes at least one information field of downlink control information (e.g., the MC-DCI, or a legacy DCI). The at least one information field may be an existing information field or a newly defined information field, for which the present disclosure is not limited.

The following mainly provides an exemplary explanation of the technical solution of the present disclosure in the case where the first information includes at least one information field of the MC-DCI being a Carrier Indicator Field (CIF). It should be understood that the embodiments in this disclosure can also be applied to other information fields in the MC-DCI besides the CIF.

In determining whether the first cell is a cell scheduled by the MC-DCI, the terminal may conduct this determination based on Radio Resource Control (RRC) signaling received in the first cell.

For example, it determines an Information Element (IE) *"ServingCellConfig"* in the RRC signaling, then determines *"CrossCarrierSchedulingConfig"* within the *"ServingCellConfig",* and subsequently determines *"schedulingCellInfo"* within the *"CrossCarrierSchedulingConfig".* Further, when the indication value of *"schedulingCellInfo"* is "other", it determines, in the *"schedulingCellInfo", "schedulingCellId"* and the carrier indicator field (*"cif-InSchedulingCell"*) used within the scheduling cell. In a multi-carrier scheduling scenario, for different serving cells, the configured values corresponding to the first information used within the scheduling cells can be the same.

When the scheduling cell identity configured within the RRC signaling is the same as the identity of the second cell, and the value which corresponds to the first information used within the scheduling cell and is configured within the RRC signaling, is the same as the value of the CIF in the MC-DCI received in the second cell, it may be determined that the MC-DCI received in the second cell is used to schedule the first cell.

In the case of scheduling multiple cells using the MC-DCI, if the dynamic switching of the scheduled cells is not supported, the same association relationship (i.e., the association relationship between the carrier indicator field and the scheduling cell identity) can be configured for different scheduled cells through the above method. That is, the value corresponding to the carrier indicator field is the same in the association relationship of each scheduled cell, and the scheduling cell identity is the same in the association relationship of each scheduled cell. Thus, the indication of multiple cells (cell combinations) for MC-DCI scheduling is realized.

However, in the case of scheduling multiple cells using the MC-DCI, if dynamic switching of the scheduled cells is supported, the scheduling flexibility of the above method is poor, because based on this method, the RRC signaling carries only a combination of one scheduling cell identity and a value corresponding to the carrier indication field used in one scheduling cell, and the terminal can only determine, based on this RRC signaling, whether the first cell is scheduled by the MC-DCI which is sent by a cell corresponding to the scheduling cell identity of the RRC signaling. When the value of the CIF in the MC-DCI is different from the value corresponding to the carrier indicator field used in the scheduling cell in the RRC signaling, or when the identity of the scheduling cell (e.g., the second cell in which the MC-DCI is received) is different from the scheduling cell identity in the RRC signaling, the scheduling of the first cell cannot be performed. Moreover, if switching of the scheduling cells is achieved by adjusting the CIF value in the MC-DCI, multiple cells (cell combinations) that are currently being scheduled will no longer be scheduled.

In embodiments of the present disclosure, the association relationship between the identity of the scheduled cell and the scheduling cell may be decoupled from the protocol framework in the related technology. The network device may configure a corresponding set of relationships for serving cells (e.g., cells currently scheduled by the MC-DCI or cells schedulable by the MC-DCI). If the terminal determines that the RRC signaling contains the set of relationships after the RRC signaling is received in a first cell among the serving cells, it can determine that the set of relationships in the RRC signaling corresponds to the first cell.

It should be noted that the terminal can receive the RRC signaling in multiple first cells, and each first cell may have its own corresponding set of relationships. The sets of relationships corresponding to different first cells may be different or the same, which may be configured as required.

The set of relationships may include an association relationship between a value corresponding to the first information and a scheduling cell identity, such as an association relationship between a value corresponding to the carrier indicator field (i.e., the first information may include a carrier indicator field) and the scheduling cell identity. In the RRC signaling, the value corresponding to the carrier indicator field may be indicated by the *"cif-InScheduingCell"* field. The above set of relationships may be carried in the RRC signaling, with types in the RRC signaling including but not limited to sequences, choices, etc. For example, it may be a sequence under an indication value "other" in the *schedulingCellInfo,* or a sequence under multiple indication values "other" in the *schedulingCellInfo.*

The "set of relationships between the value corresponding to the first information and the scheduling cell identity" described above may include an association relationship between a value corresponding to one piece of first information and one scheduling cell identity. For example, a value corresponding to the first information is 1 and the corresponding scheduling cell identity is 0.

The "set of relationships between the value corresponding to the first information and the scheduling cell identity" described above may include association relationships between values corresponding to multiple pieces of the first information and one scheduling cell identity. For example, when a value corresponding to the first information is 1, the corresponding scheduling cell identity is 0, and when a value corresponding to the first information is 2, the corresponding scheduling cell identity is 0.

The "set of relationships between the value corresponding to the first information and the scheduling cell identity" described above may include association relationships between values corresponding to multiple pieces of the first information and multiple scheduling cell identities. For example, when a value corresponding to the first information is 1, the corresponding scheduling cell identity is 0, and when a value corresponding to the first information is 3, the corresponding scheduling cell identity is 2.

According to embodiments of the present disclosure, an association relationship between a value corresponding to first information corresponding to each first cell and a scheduling cell identity can be determined. Since the set of relationships may define correspondences between values corresponding to multiple pieces of the first information and multiple scheduling cell identities, and is not limited to a value corresponding to one piece of first information being associated with one scheduling cell identity, it is beneficial for the network device to improve the flexibility of scheduling of the first cell by the MC-DCI when it transmits the MC-DCI to the terminal according to this set of relationships. For example, the network device may set the value corresponding to the first information according to the set of relationships corresponding to the first cell to be scheduled, so as to dynamically adjust a plurality of cells (cell combinations) scheduled by the MC-DCI.

The following is an example of the first information including the carrier indicator field (i.e., CIF) in the MC-DCI.

For example, in the set of relationships, when the value corresponding to the CIF is 1, the corresponding scheduling cell identity is 0, and when the value corresponding to the CIF is 2, the corresponding scheduling cell identity is 0. In this case, the network device can realize scheduling for the first cell when the value of the CIF in the MC-DCI which is sent in the second cell with the cell identity 0 to the terminal is 1. It can also realize scheduling for the first cell when the value of the CIF in the MC-DCI which is sent in the second cell with the cell identity 0 to the terminal is 2. The value of the CIF may range from 0 to 7, and, of course, may be adjusted as required.

For example, in the set of relationships, when the value corresponding to the CIF is 1, the corresponding scheduling cell identity is 0, and when the value corresponding to the CIF is 3, the corresponding scheduling cell identity is 2. In this case, the network device can realize scheduling for the first cell when the value of the CIF in the MC-DCI which is sent in the second cell with the cell identity 0 to the terminal is 1. It can also realize scheduling for the first cell when the value of the CIF in the MC-DCI which is sent in the second cell with the cell identity 2 to the terminal is 3.

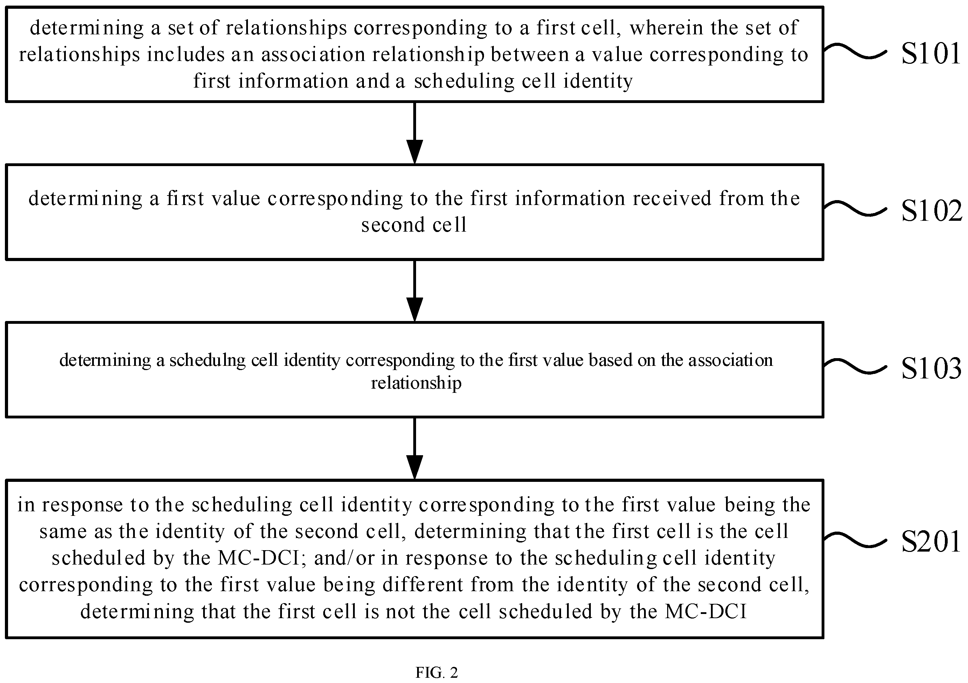

FIG. 2 is a schematic flowchart of another method for determining scheduling illustrated according to embodiments of the present disclosure. As shown in FIG. 2, said determining, based on the relationship between the scheduling cell identity corresponding to the first value and the identity of the second cell, whether the first cell is the cell scheduled by the MC-DCI, includes:
Step S201, in response to the scheduling cell identity corresponding to the first value being the same as the identity of the second cell, determining that the first cell is the cell scheduled by the MC-DCI; and/or in response to the scheduling cell identity corresponding to the first value being different from the identity of the second cell, determining that the first cell is not the cell scheduled by the MC-DCI.

In one embodiment, after receiving the MC-DCI in the second cell, the terminal may determine a value corresponding to the first information in the MC-DCI, for example called a first value, which in turn may determine whether the first value is present in the set of relationships.

If the first value is not present in the set of relationships, it is determined that the first cell is not a cell scheduled by the MC-DCI. In this case, it may not be necessary to take into account the scheduling cell identity in the set of relationships. If the first value is present in the set of relationships but the scheduling cell identity corresponding to the first value is different from the identity of the second cell, it is also determined that the first cell is not a cell scheduled by the MC-DCI. Only when the first value exists in the set of relationships and the scheduling cell identity corresponding to the first value is the same as the identity of the second cell, it is determined that the first cell is a cell scheduled by the MC-DCI.

In one embodiment, said determining the set of relationships corresponding to the first cell includes:
receiving indication signaling in the first cell; and
determining the set of relationships in the indication signaling.

The network device may send indication signaling to the terminal in the first cell and carry in the indication signaling the set of relationships corresponding to the first cell. After the terminal receives the indication signaling in the first cell, when it is determined that the indication signaling carries the set of relationships, it may determine the set of relationships in the indication signaling, as the set of relationships corresponding to the first cell. For example, the indication signaling contains one or more association relationships, and the association relationship may be an association relationship between a value corresponding to the first information and a scheduling cell identity.

In one embodiment, the indication signaling includes at least one of:
Radio Resource Control (RRC) signaling;
Media Access Control (MAC) signaling, e.g., Media Access Control Control Element (MAC CE);
Physical layer signaling, e.g., Downlink Control Information (either legacy DCI or MC-DCI).

In one embodiment, taking the example where the first information includes at least one information field in the MC-DCI, and the at least one information field includes a carrier indicator field, the method further includes: determining an indication value of scheduling cell information in the RRC signaling, wherein the determination of the set of relationships is performed in the RRC signaling in response to the indication value of the scheduling cell information being 'other'.

It should be understood that embodiments of the present disclosure are not limited to the case where the indication value of the scheduling cell information is "other", and that in cases other than those where the indication value of the scheduling cell information is "other", the set of relationships can be determined in the RRC signaling as required. For the sake of illustration, the present disclosure is illustrated hereinafter mainly with respect to determining the set of relationships in the RRC signaling in the case where the indication value of the scheduling cell information is "other".

The cross-carrier scheduling configuration of the RRC signaling received by the terminal in the first cell may contain scheduling cell information *"schedulingCellInfo"* which may contain multiple types of data, such as choice, sequence, boolean, integer, float, and the like. Among them, the indication value of the 'choice' type data may be either 'own' or 'other'. In all embodiments of the present disclosure, the indication value of the scheduling cell information may refer to the indication value of the 'choice' type data within the scheduling cell information.

In the case where the indication value of the scheduling cell information is 'own', it is indicated that the first cell can be scheduled by the MC-DCI which is received by the terminal in the first cell, but not by the MC-DCI received in the other cell (e.g., the second cell). In this case, the terminal has already determined that the first cell is only scheduled by the MC-DCI received in the first cell, and thus there is no need for the network device to carry the set of relationships in the RRC signaling. Therefore, it is not necessary for the terminal to determine the set of relationships for multi-cell scheduling in the RRC signaling in the case where the indication value of the scheduling cell information is 'own'.

In the case where the indication value of the scheduling cell information is 'other', it is indicated that the first cell can be scheduled by the MC-DCI which is received by the terminal in other cells (cells other than the first cell), e.g., through cross-carrier scheduling. In this case, the terminal still needs to determine in which cell the MC-DCI that schedules the first cell is received by the terminal, and thus the network device can carry the set of relationships in the RRC signaling for the terminal to determine whether the first cell is scheduled by the MC-DCI received in the second cell. That is, it is only necessary for the terminal to determine the set of relationships in the RRC signaling in case the indication value of the scheduling cell information is 'other'. The value corresponding to the first information in the set of relationships may be the value of the carrier indicator field (which may be referred to as *cif-InScheduingCell-r18*) used within the scheduling cell in the scheduling cell information in the RRC signaling.

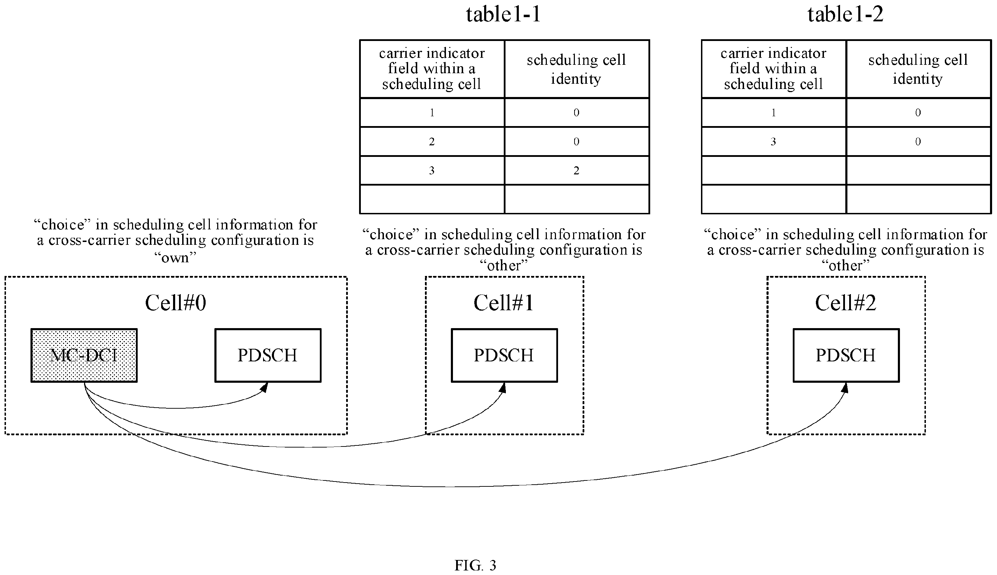

FIG. 3 is a schematic diagram of an application scenario illustrated according to embodiments of the present disclosure.

FIG. 3 illustrates an example where the first cell includes Cell#1 (i.e., a cell identity is 1) and Cell#2 (i.e., a cell identity is 2), the second cell includes Cell#0 (i.e., a cell identity is 0), and the first information includes the carrier indicator field in the MC-DCI.

The set of relationships carried in the RRC signaling sent by the network device to the terminal in Cell#1 is table1-1, and the set of relationships carried in the RRC signaling sent in Cell#2 to the terminal is table1-2.

Table 1-1 contains association relationships between values corresponding to multiple carrier indicator fields and multiple scheduling cell identities. When the value corresponding to the carrier indicator field is 1, the corresponding scheduling cell identity is 0. When the value corresponding to the carrier indicator field is 2, the corresponding scheduling cell identity is 0. When the value corresponding to the carrier indicator field is 3, the corresponding scheduling cell identity is 2. It should be noted that, in the same table the values corresponding to the carrier indicator fields are different.

Table1-2 contains association relationships between values corresponding to multiple carrier indicator fields and one scheduling cell identity. When the value corresponding to the carrier indicator field is 1, the corresponding scheduling cell identity is 0. When the value corresponding to the carrier indicator field is 3, the corresponding scheduling cell identity is 0.

It should be noted that the blank portion of the table shown in FIG. 3 may also be set with values corresponding to the carrier indicator fields and the scheduling cell identities that are not used in the example process of this embodiment and thus are not shown. In addition, the number of rows in the table is not limited to the 4 rows shown in the figure, and the number of rows may be reduced or increased as needed.

In the case where the terminal receives the MC-DCI in Cell#0, if the terminal determines that the value of the CIF in the MC-DCI is 01 (i.e., 1), the terminal further determines that there exists a carrier indicator field with a value of 1 in table1-1, so that the terminal can determine that the carrier indicator field with a value of 1 corresponds to a scheduling cell identity of 0 in table1-1, which is the same as the identity of Cell#0. Thereby, the terminal can determine that Cell#1 is the cell scheduled by the MC-DCI received in Cell#0. The terminal determines that there exists a carrier indicator field with a value of 1 in table1-2, so that the terminal can determine that the carrier indicator field with a value of 1 corresponds to a scheduling cell identity of 0 in table1-2, which is the same as the identity of Cell#0. Thereby, the terminal can determine that Cell#2 is the cell scheduled by the MC-DCI received in Cell#0.

The network device may adjust the value of the CIF in the MC-DCI as required, thereby adjusting the cell scheduled by the MC-DCI. For example, the terminal determines that the value of the CIF in the MC-DCI is changed to 10 (10 in the binary corresponds to 2 in the decimal), and further determines that there exists a carrier indicator field with the value of 2 in table1-1, so that the terminal can determine that the carrier indicator field with the value of 2 in table1-1 corresponds to a scheduling cell identity of 0, which is the same as the identity of Cell#0. Thereby, the terminal can determine that Cell#1 is the cell scheduled by the MC-DCI received in Cell#0. If the terminal determines that there is no carrier indicator field with a value of 1 in table1-2, it can determine that Cell#2 is not the cell scheduled by the MC-DCI received in Cell#0.

The MC-DCI received by the terminal in Cell#0 can be used to schedule Cell#0 in addition to cells other than Cell#0. This can be determined by the terminal based on whether the 'choice' in the scheduling cell information of the cross-carrier scheduling configuration in the RRC signaling received in Cell#0 is 'own' or 'other'. If the 'choice' is 'own', it can be determined that the MC-DCI can be used to schedule Cell#0 or is not scheduled by any cell. If the indication value of the scheduling cell information is 'other', it can be determined that Cell#0 is the scheduled cell, and that Cell#0 is scheduled by the MC-DCI received by the terminal in a cell other than Cell#0.

In one embodiment, if the terminal does not identify the set of relationships in the RRC signaling received in the first cell, it may determine whether the first cell is scheduled by the second cell according to the legacy method. For example, the terminal determines whether the scheduling cell identity in the scheduling cell information is the same as the identity of the second cell. If the scheduling cell identity in the scheduling cell information is the same as the identity of the second cell, the terminal further determines whether the value corresponding to the carrier indicator field used within the scheduling cell in the scheduling cell information is the same as the value of the CIF in the MC-DCI received in the second cell. If they are the same, the terminal can determine that the MC-DCI received in the second cell is used for scheduling the first cell.

It should be noted that all embodiments of the present disclosure involve tables in which each element exists independently of the other elements. These elements are exemplarily listed in the same table, which does not mean that all elements in the table must exist simultaneously according to the table as shown. The value of each of these elements is independent of any other element value in the table. Thus it can be understood by those skilled in the art that the value of each element in the table is an independent example.

In one embodiment, the network device may carry the set of relationships via the RRC signaling and send it to the terminal, or may carry the set of relationships in other ways and send it to the terminal, e.g., carrying the set of relationships in the media access control control element. Additionally, the set of relationships can be determined through a predefined method.

In the case where the set of relationships is carried in the RRC signaling to be sent to the terminal, the set of relationships can specifically be carried in the scheduling cell information (*"schedulingCellInfo-r18"*) of the RRC signaling. In one embodiment, contents contained in the scheduling cell information may be shown below:

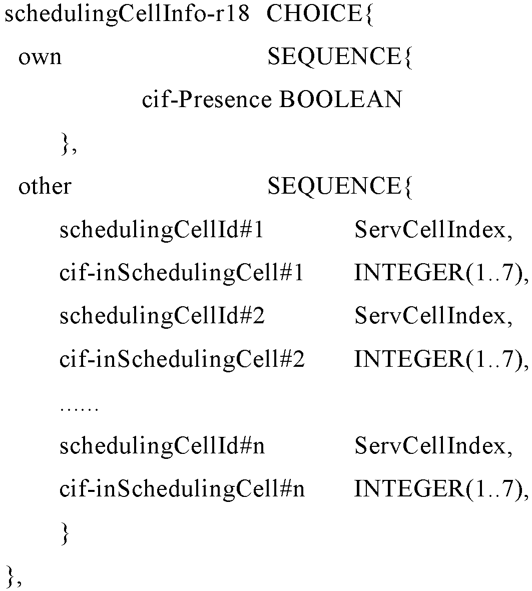

In the case where the indication information of the scheduling cell information is "other", the "sequence" may include n indication combinations, n being an integer greater than 1. Each indication combination in the "sequence" contains a group formed by a value corresponding to the first information (e.g., the carrier indicator field) and a scheduling cell identity. The n indication combinations (i.e., values corresponding to n pieces of the first information and n scheduling cell identities) constitute the set of relationships to be carried.

For a terminal that does not support multi-cell scheduling, and a terminal that supports multi-cell scheduling but receives a legacy MC-DCI (e.g., an MC-DCI for scheduling a single cell), both of these terminals, after receiving the carried set described above, can determine the cell scheduled by the received legacy MC-DCI based on the existing scheduling cell information (*"schedulingCellInfo"*)*.* Alternatively, they can determine the cell scheduled by the received legacy MC-DCI based on the set carried in the scheduling cell information described in this embodiment, which can be referred to as *"schedulingCellInfo-r18".*

In determining the cell scheduled by the received legacy MC-DCI based on the carried set in the scheduling cell information in this embodiment, a single cell scheduled by the received legacy MC-DCI can be determined through a value corresponding to the first information and the scheduling cell identity in the preset indication combinations. For example, the single cell scheduled by the legacy MC-DCI can be determined according to a value corresponding to the first information and the scheduling cell identity (i.e., *"cif-inSchedulingCell#1"* and *"schedulingCellId#1"*) in the first indication combination of the preset indication combinations.

In one embodiment, contents contained in the scheduling cell information may be shown below:

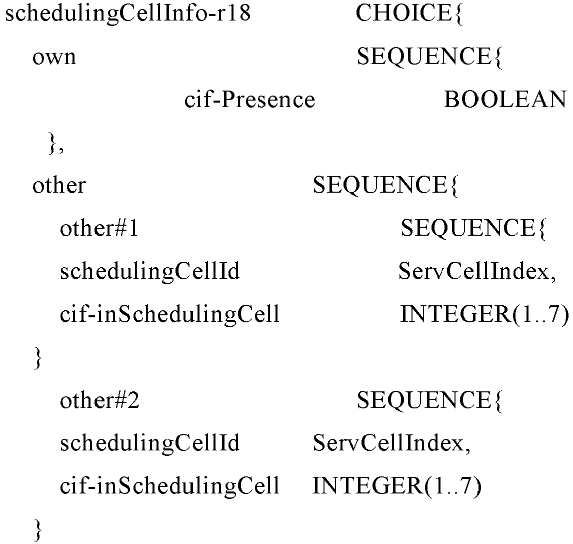

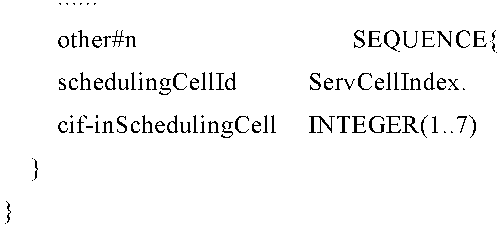

In the scheduling cell information, n "other" may be included, "sequence" in each "other" may include one indication combination which contains a group formed by a value corresponding to the first information and a scheduling cell identity. The indication combinations (i.e., values corresponding to n pieces of first information and n scheduling cell identities) of "sequence" in the n "other" constitute the set to be carried.

For a terminal that does not support multi-cell scheduling, and a terminal that supports multi-cell scheduling but receives a legacy MC-DCI (e.g., an MC-DCI for scheduling a single cell), both of these terminals, after receiving the carried set described above, can determine the cell scheduled by the received legacy MC-DCI based on the existing scheduling cell information (*"schedulingCellInfo"*)*.* Alternatively, they can determine the cell scheduled by the received legacy MC-DCI based on the set carried in the scheduling cell information described in this embodiment, which can be referred to as *"schedulingCellInfo-r18".*

In determining the cell scheduled by the received legacy MC-DCI based on the carried set in the scheduling cell information according to this embodiment, a single cell scheduled by the received legacy MC-DCI can be determined through the indication combination (containing a value corresponding to the first information and a scheduling cell identity) in the preset "other" indication value. For example, the single cell scheduled by the received legacy MC-DCI can be determined based on the value corresponding to the first information and the scheduling cell identity in the indication combination in a first "other" (i.e., other#1).

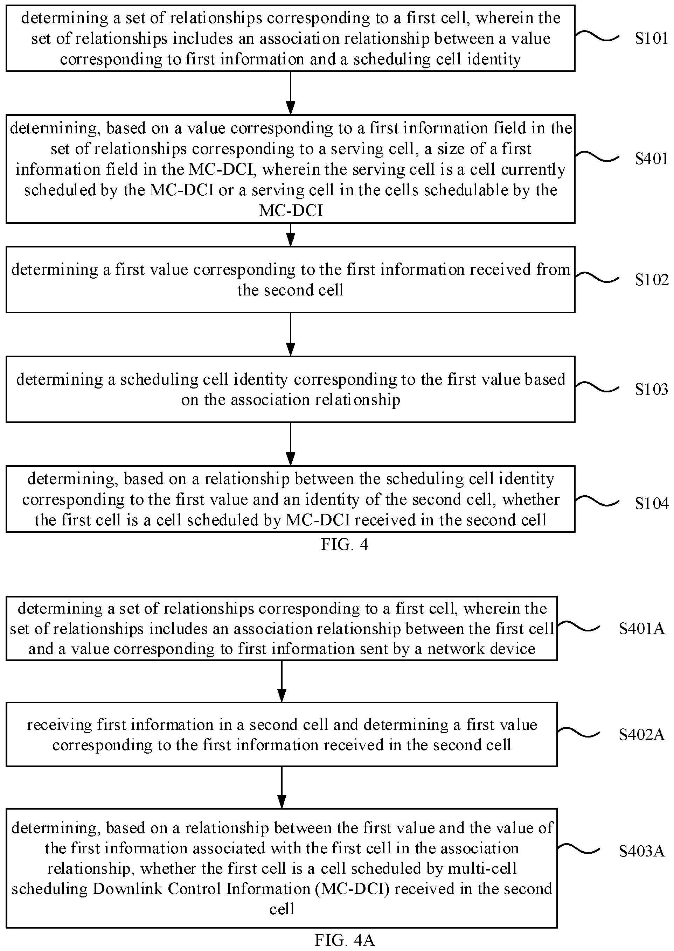

FIG. 4 is a schematic flowchart of yet another method for determining scheduling illustrated according to embodiments of the present disclosure. As shown in FIG. 4, taking the first information including at least one information field in the downlink control information, e.g., including a first information field, as an example, the method further includes:

Step S401, determining, based on a value corresponding to a first information field in the set of relationships corresponding to a serving cell, a size (i.e., a number of occupied bits) of a first information field in the MC-DCI, wherein the serving cell is a cell currently scheduled by the MC-DCI (e.g., the first cell) or a serving cell in the cells schedulable by the MC-DCI (e.g., including the first cell and cells other than the first cell). The cells schedulable by the MC-DCI can be defined in the form of a set.

In one embodiment, the way the terminal parses the MC-DCI may be different when the size of the first information field in the MC-DCI is different. Thus, the terminal needs to determine the size of the first information field in the MC-DCI received in the second cell in order to accurately parse the MC-DCI.

Since there can be more than one value for the first information field in the carried set indicated by the network device to the terminal, the size of the first information field in the MC-DCI sent by the network device to the terminal needs to be sufficient to indicate all the values corresponding to the first information field. Therefore, the size of the first information field in the MC-DCI can be determined according to a range of a value corresponding to the first information field in the set of relationships corresponding to the serving cell. For example, a maximum value of the first information field in the set of relationships corresponding to the serving cell can be determined, and the size of the first information field in the MC-DCI can be determined according to the maximum value. For example, when the maximum value is 7, it can be determined that the size of the first information field in the MC-DCI is 3 bits. For example, when the maximum value is 3, it can be determined that the size of the CIF in the MC-DCI is 2 bits.

In one embodiment, said determining, based on the value corresponding to the first information field in the set of relationships corresponding to the serving cell, the size of the first information field in the MC-DCI, includes:
in response to ranges of values corresponding to the first information field in the set of relationships corresponding to the serving cell being the same, determining the size of the first information field in the MC-DCI based on the ranges of the values corresponding to the first information field;
and/or, in response to ranges of values corresponding to the first information field in the set of relationships corresponding to the serving cell being different, determining the size of the first information field in the MC-DCI based on a maximum range of the values corresponding to the first information field of the set of relationships corresponding to the serving cell.

In the case where the ranges of the values corresponding to the first information field in the set of relationships corresponding to the serving cell are the same, the maximum value of the first information field in the set of the relationships corresponding to the serving cell is also the same, the size of the CIF in the MC-DCI can be determined based on the range of the value corresponding to the first information (e.g., the maximum value of the carrier indicator field). For example, if the range is from 0 to 3, the size of the first information field in the MC-DCI can be determined as 2 bits; if the range is from 0 to 7, the size of the first information field in the MC-DCI can be determined as 3 bits.

In the case where the ranges of the values corresponding to the first information field in the set of relationships corresponding to the serving cell are different (e.g., partially, or entirely different), the maximum values of the first information field in the set of relationships corresponding to the serving cell may also be different. Therefore, it is necessary to determine the maximum range of the values corresponding to the first information field in the set of relationships corresponding to the serving cell, and then determine the size of the first information field in the MC-DCI based on this maximum range. For example, if the range of values corresponding to the first information field in the set of relationships corresponding to Cell 1 is from 0 to 3, and the range of values corresponding to the first information field in the set of relationships corresponding to Cell 2 is from 0 to 7, the maximum range is from 0 to 7. Based on this, it can be determined that the size of the first information field in the MC-DCI is 3 bits.

FIG. 4A is a schematic flowchart of a method for determining scheduling illustrated according to embodiments of the present disclosure. The method for determining scheduling can be performed by a terminal. The terminal includes, but is not limited to, a communication device such as a cell phone, a tablet, a wearable device, a sensor, an IoT device, and the like. The terminal can communicate with a network device. The network device includes, but is not limited to, a network device in a communication system such as 4G, 5G, 6G, etc. It can be a base station, a core network, and the like.

As shown in FIG. 4A, the method for determining scheduling includes the following steps.
Step S401A, determining a set of relationships corresponding to a first cell, wherein the set of relationships includes an association relationship between the first cell and a value corresponding to first information sent by a network device;
Step S401B, receiving first information in a second cell and determining a first value corresponding to the first information received in the second cell;
Step S401C, determining, based on a relationship between the first value and the value of the first information associated with the first cell in the association relationship, whether the first cell is a cell scheduled by multi-cell scheduling Downlink Control Information (MC-DCI) received in the second cell.

In one embodiment, the set of relationships may include one or more association relationships. The association relationship refers to an association relationship between a value corresponding to the first information and the first cell.

According to embodiments of the present disclosure, the association relationship between the identity of the scheduled cell and the scheduling cell may be decoupled from the protocol framework in the related technology. The network device may configure a corresponding set of relationships for serving cells (e.g., cells currently scheduled by the MC-DCI or cells schedulable by the MC-DCI). If the terminal determines that the RRC signaling contains the set of relationships after the RRC signaling is received in a first cell among the serving cells, it can determine that the set of relationships in the RRC signaling corresponds to the first cell.

It should be noted that the terminal can receive the RRC signaling in multiple first cells, and each first cell may have its own corresponding set of relationships. The sets of relationships corresponding to different first cells may be different or the same, which may be configured as required.

The set of relationships may include an association relationship between a value corresponding to the first information and the first cell, such as an association relationship between a value corresponding to the carrier indicator field and the first cell.

The "set of relationships between the value corresponding to the first information and the scheduling cell identity" described above may include an association relationship between a value corresponding to one piece of first information and the first cell. For example, the first information corresponding to the first cell has a corresponding value of 1.

The "set of relationships between the value corresponding to the first information and the scheduling cell identity" may include association relationships between values corresponding to multiple pieces of the first information and the first cell. For example, the first information corresponding to the first cell has corresponding values of 1 and 2.

According to embodiments of the present disclosure, an association relationship between a value corresponding to the first information corresponding to each first cell and the first cell can be determined. Since the set of relationships may define values corresponding to multiple pieces of first information associated with the same cell and is not limited to a value corresponding to one piece of first information associated with the first cell, it is beneficial to improve the scheduling flexibility of the MC-DCI for the first cell when the network device sends the MC-DCI to the terminal according to the set of relationships. For example, the network device may set the value corresponding to the first information according to the set of relationships corresponding to the first cell to be scheduled, thereby dynamically adjusting the plurality of cells (cell combinations) scheduled by the MC-DCI.

Taking the first information as an example, which includes the Carrier Indicator Field (CIF) in the MC-DCI, the first cell can include Cell#0, Cell#1, and Cell#2.

For example, in the set of relationships corresponding to Cell#0, Cell#0 corresponds to CIF values of 0 and 1; in the set of relationships corresponding to Cell#1, Cell#1 corresponds to CIF values of 1 and 2; and in the set of relationships corresponding to Cell#2, Cell#2 corresponds to CIF values of 1 and 3.

In this example, when the value of the CIF in the MC-DCI sent by the network device to the terminal in Cell#0 (i.e., Cell#0 serves as the second cell) is 1, it can be determined that the MC-DCI schedules Cell#0, Cell#1 and Cell#2 since the value of CIF is 1, and there exists a value of CIF of 1 in all of the above relationships corresponding to Cell#0, Cell#1, and Cell#2, i.e., a value of CIF of 1 corresponds to Cell#0, Cell#1, and Cell #2.

Similarly, when the value of the CIF in the MC-DCI sent by the network device to the terminal in Cell#0 (i.e., Cell#0 serves as the second cell) is 2, it can be determined that the MC-DCI schedules Cell#1 since the value of CIF is 1, and there exists a value of CIF of 2 in the relationships corresponding to Cell#1, i.e., a value of CIF of 2 corresponds to Cell#1.

The subsequent embodiments correspond to some of the preceding embodiments and have similar implementations. The implementation methods can be determined by referring to the corresponding embodiments mentioned earlier, and therefore will not be repeated here.

In one embodiment, said determining, based on the relationship between the first value and the value of the first information associated with the first cell in the association relationship, whether the first cell is a cell scheduled by MC-DCI received in the second cell, includes:
in response to the first value being the same as the value of the first information associated with the first cell in the association relationship, determining that the first cell is the cell scheduled by the MC-DCI; and/or
in response to the first value being different from the value of the first information associated with the first cell in the association relationship, determining that the first cell is not the cell scheduled by the MC-DCI.

In one embodiment, said determining the set of relationships corresponding to the first cell includes:
receiving indication signaling in the first cell; and
determining the set of relationships in the indication signaling.

In one embodiment, the indication signaling includes at least one of:
Radio Resource Control (RRC) signaling;
Media Access Control (MAC) signaling;
Physical layer signaling.

In one embodiment, the first information includes at least one information field in the downlink control information.

In one embodiment, the at least one information field includes a carrier indicator field.

In one embodiment, when the indication signaling includes the RRC signaling, the method further includes:
determining an indication value of scheduling cell information in the RRC signaling;
wherein the determination of the set of relationships is performed in the RRC signaling in response to the indication value of the scheduling cell information being 'other'.

In one embodiment, the method further includes:
determining, based on a value corresponding to a first information field in the set of relationships corresponding to a serving cell, a size of a first information field in the MC-DCI, wherein the serving cell includes a cell that is currently scheduled by the MC-DCI or a cell that is schedulable by the MC-DCI.

In one embodiment, said determining, based on the value of the first information field in the set of relationships received in the serving cell, the size of the first information field in the MC-DCI includes:
in response to ranges of values of the first information field of the set of relationships corresponding to the serving cell being the same, determining the size of the first information field in the MC-DCI based on the ranges of the values of the first information field;
   and/or
in response to ranges of values of the first information field of the set of relationships corresponding to the serving cell being different, determining the size of the first information field in the MC-DCI based on a maximum range of the values of the first information field of the set of relationships corresponding to the serving cell.

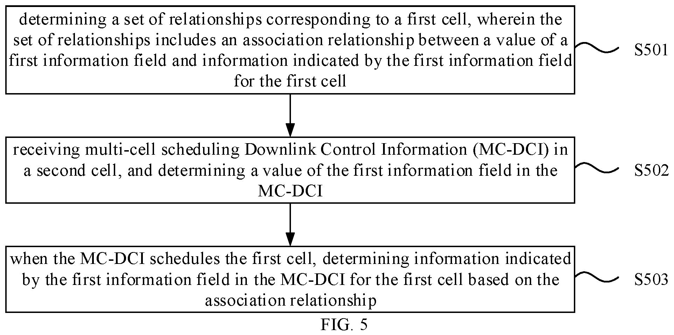

FIG. 5 is a schematic flowchart of a method for determining an indication illustrated according to embodiments of the present disclosure. The method for determining an indication illustrated in this embodiment may be performed by a terminal. The terminal includes, but is not limited to, a communication device such as a cell phone, a tablet, a wearable device, a sensor, an IoT device, and the like. The terminal may communicate with a network device. The network device includes, but is not limited to, a network device in a communication system such as 4G, 5G, 6G, etc. For example, it may be a base station, a core network, and the like.

As shown in FIG. 5, the method for determining an indication may include the following steps.

Step S501, determining a set of relationships corresponding to a first cell, wherein the set of relationships includes an association relationship between a value of a first information field and information indicated by the first information field for the first cell.

Step S502, receiving multi-cell scheduling Downlink Control Information (MC-DCI) in a second cell, and determining a value of the first information field in the MC-DCI.

Step S503, when the MC-DCI schedules the first cell, determining information indicated by the first information field in the MC-DCI for the first cell based on the association relationship.

In one embodiment, the first information field includes, but is not limited to, a Bandwidth part (BWP) indicator, Time Domain Resource Assignment (TDRA), Frequency Domain Resource Assignment (FDRA), ZP CSI-RS trigger, Downlink assignment index, PUCCH resource indicator, PDSCH-to-HARQ feedback timing indicator, Antenna port(s), Transmission configuration indication, SRS request, and DMRS sequence initialization.

The following is an exemplary illustration of the technical solution of the present disclosure, mainly using the information field, BWP indicator, as an example.

In one embodiment, in the case of scheduling a plurality of cells via the MC-DCI, the information field in the MC-DCI also needs to complete indications for each of the plurality of cells. For example, if the terminal receives the MC-DCI in the second cell, Cell#0, and the first cell scheduled by the MC-DCI includes Cell#1 and Cell#2, it is necessary to determine the information indicated by the information field in the MC-DCI for Cell#1 and for Cell#2. For example, for the BWP indicator in the MC-DCI, there is a need to determine a BWP identity indicated by the BWP indicator for Cell#1, and a BWP identity indicated for Cell#2.

In embodiments of the present disclosure, a network device may configure a corresponding set of relationships for a serving cell (e.g., a cell currently scheduled by the MC-DCI or a cell that can be scheduled by the MC-DCI). For example, if the terminal determines that the RRC signaling contains the set of relationships after the RRC signaling is received in a first cell among the serving cells, it can determine that the set of relationships in the RRC signaling is the set of relationships corresponding to the first cell.

It should be noted that the terminal can receive the RRC signaling in multiple first cells, and each first cell may have its own corresponding set of relationships. The sets of relationships corresponding to different first cells may be different or the same, which may be configured as required.

The above set of relationships between the first information field and the information indicated by the first information field for the first cell may include an association relationship between the value of the first information field and the information indicated by the first information field for the first cell, which may be carried in the RRC signaling.

The above set of relationships between the first information field and the information indicated by the first information field for the first cell may include an association relationship between a value of one first information field and information indicated by said one first information field for the first cell. For example, the value of the first information field is 1 and the indicated information is a BWP identity of 3.

The above set of relationships between the first information field and the information indicated by the first information field for the first cell may include an association relationship between values of multiple first information fields and information indicated by said multiple first information fields for the first cell. For example, the value of the first information field is 0 and the indicated information is a BWP identity of 2; and the value of the first information field is 1 and the indicated information is a BWP identity of 3.

According to embodiments of the present disclosure, an association relationship between a value of a first information field corresponding to each first cell and the information indicated by the first information field for the first cell can be determined. Thus, the terminal can determine the information indicated by the information field in the MC-DCI for each first cell according to the association relationship after receiving the MC-DCI in the second cell. Since the set of relationships is allocated and configured for each first cell, the set of relationships corresponding to each first cell may be different, which facilitates flexible adjustment of the information indicated by the MC-DCI for each first cell.

In one embodiment, said determining the set of relationships corresponding to the first cell includes:
receiving Radio Resource Control (RRC) signaling in the first cell; and
determining the set of relationships in the RRC signaling.

The network device may send RRC signaling to the terminal in the first cell and carry in the RRC signaling the set of relationships corresponding to the first cell. Upon receiving the RRC signaling in the first cell, the terminal, when determining that the RRC signaling carries the set of relationships, may determine the set of relationships in the RRC signaling, as the set of relationships corresponding to the first cell.

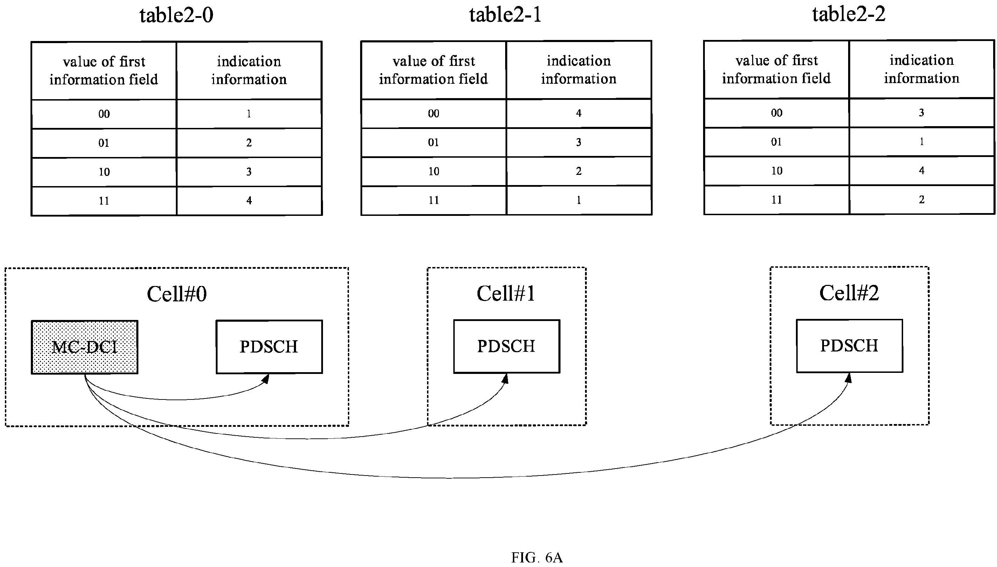

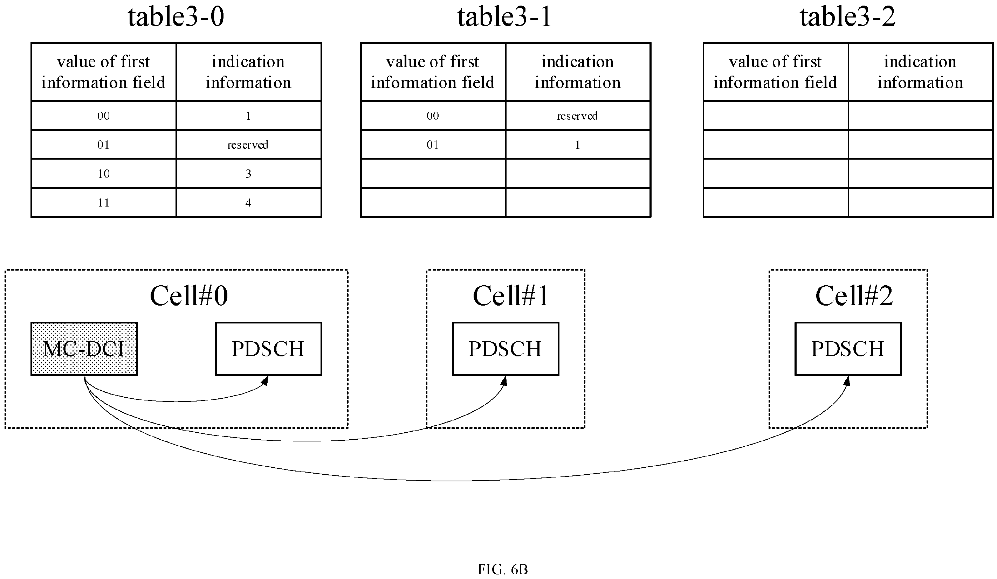

FIG. 6A is a schematic diagram of one application scenario illustrated according to embodiments of the present disclosure. FIG. 6B is a schematic diagram of another application scenario illustrated according to embodiments of the present disclosure.

FIG. 6A illustrates an example where the first cell includes Cell#1 (with a cell identity of 1) and Cell#2 (with a cell identity of 2), the second cell includes Cell#0 (with a cell identity of 0), and the first information field includes the BWP indicator.

The terminal determines that the MC-DCI received in Cell#0 schedules the first cell Cell#1 and the first cell Cell#2, and also schedules the second cell Cell#0. The set of relationships carried by the network device in the RRC signaling sent to the terminal in Cell#0 is table2-0, and the set of relationships carried in the RRC signaling sent to the terminal in Cell#1 is table2-1, and the set of relationships carried in the RRC signaling sent to the terminal in Cell#2 is table2-2.

Table2-0, table2-1, and table2-2 contain association relationships between the values of the plurality of first information fields and the information indicated by the plurality of first information fields for the first cell. For example, in table2-1, when the value of the BWP indicator in the MC-DCI is 00, the indicated information is a BWP ID of 2; when the value of the BWP indicator in the MC-DCI is 01, the indicated information is a BWP ID of 3; when the value of the BWP indicator in the MC-DCI is 10, the indicated information is a BWP ID of 2; and when the value of the BWP indicator in the MC-DCI is 11, the indicated information is a BWP ID of 10.

In the case where the terminal receives the MC-DCI in Cell#0, if the terminal determines that the value of the BWP indicator in the MC-DCI is 01 (i.e., 1), the terminal further determines that there exists a BWP indicator with a value of 1 in table2-0, which in turn allows it to determine that the information indicated by the BWP indicator with a value of 1 in table2-0 is a BWP ID of 2, thereby determining that the BWP ID indicated by the MC-DCI for Cell#0 is 2. If the terminal determines that there is a BWP indicator with a value of 1 in table2-1, it can further determine that the information indicated by the BWP indicator with a value of 1 in table2-1 is a BWP ID of 3, thereby determining that the BWP ID indicated by the MC-DCI for Cell#1 is 3. The terminal may determine that a BWP indicator with a value of 1 is present in table2-2, which in turn may determine that the information indicated by the BWP indicator with a value of 1 in table2-2 is a BWP ID of 1, thereby determining that the BWP ID indicated by the MC-DCI for Cell#2 is 1.

FIG. 6B illustrates an example where the first cell includes Cell#1 (with a cell identity of 1) and Cell#2 (with a cell identity of 2), the second cell includes Cell#0 (with a cell identity of 0), and the first information field includes the ZP CSI-RS trigger.

The terminal determines that the MC-DCI received in Cell#0 schedules the first cell Cell#1 and Cell#2, and also schedules the second cell Cell#0. The set of relationships carried by the network device in the RRC signaling sent to the terminal in Cell#0 is table3-0, the set of relationships carried in the RRC signaling sent to the terminal in Cell#1 is table3-1, and the RRC signaling sent to the terminal in Cell#2 does not carry the set of relationships, or the carried set of relationships is table3-2, which is blank, indicating that the corresponding BWP is not configured.

Table3-0 and table3-1 contain association relationships between the values of the plurality of first information fields and the information indicated by the plurality of first information fields for the first cell. For example, in table3-1, when the value of the ZP CSI-RS trigger in the MC-DCI is 00, the indicated information is "reserved"; when the value of the ZP CSI-RS trigger in the MC-DCI is 01, the indicated information is that the ZP CSI-RS resource set ID is 1.

In the case where the terminal receives the MC-DCI in Cell#0, if the terminal determines that the value of the ZP CSI-RS trigger in the MC-DCI is 01 (i.e., 1), the terminal further determines that there is a ZP CSI-RS trigger with a value of 1 in table3-0, which in turn can determine that the information indicated by the ZP CSI-RS trigger with a value of 1 in table3-0 is that the ZP CSI-RS resource set ID is "reserved," thereby determining that the ZP CSI-RS resource set ID indicated by the MC-DCI for Cell#0 is "reserved." If the terminal determines that there is a ZP CSI-RS trigger with a value of 1 in table3-1, which in turn can determine that the information indicated by the ZP CSI-RS trigger with a value of 1 in table3-1 is that the ZP CSI-RS resource set ID is 1, thereby determining that the ZP CSI-RS resource set ID indicated by the MC-DCI for Cell#1 is 1.

It should be noted that in FIGS. 6A and 6B, the values of the first information field are arranged from 00 to 11, but in specific applications, the arrangement of the values of the first information field in the table may be set as desired, for example, it may be set to be from 11 to 00, or it may not be monotonically increasing or decreasing from the top to the bottom, for example, it may be set to be from the top to the bottom as 10, 01, 00, 11.

In one embodiment, the network device may carry the set of relationships to be sent to the terminal via the RRC signaling. Alternatively, it may carry the set of relationships to be sent to the terminal in other ways, e.g. it may be carried in the MAC CE to be sent to the terminal.

In the case where the set of relationships is carried in the RRC signaling to be sent to the terminal, taking the BWP indicator as the first information as an example, the RRC signaling may include n indication combinations, n being an integer greater than 1, and each indication combination includes a group formed by a value of the BWP indicator and the BWP ID. Thus, the n indication combinations (i.e., values of n BWP indicators and BWP IDs) constitute the set of relationships.

For a terminal that does not support multi-cell scheduling, and a terminal that supports multi-cell scheduling but receives a legacy MC-DCI (e.g., an MC-DCI for scheduling a single cell), both of these terminals, after receiving the set of relationships described above, can determine based on the value of the BWP indicator and the BWP ID in a preset indication group therein, the BWP ID indicated by the BWP indicator in the received MC-DCI for the first cell. For example, the BWP ID indicated by the BWP indicator in the received MC-DCI for the first cell may be determined based on the value of the BWP indicator and the BWP ID in a first indication group.

It should be noted that if the terminal does not receive the set of relationships in the RRC signaling received in all the cells scheduled by the MC-DCI, the information indicated by the first information field for the first cell can be determined according to the legacy method.

The information indicated by the first information field for the first cell can also be determined through other methods. For example, it can be determined based on the configuration of a reference cell. For example, it can be determined based on the configuration parameters related to the first information field in the RRC signaling received in the first cell and the value of the first information field in the MC-DCI.

The reference cell may be determined according to predefined rules, for example, it may be the second cell, or a cell with the largest or smallest cell identity among the cells currently scheduled by the MC-DCI or among the cells that can be scheduled by the MC-DCI.

Taking the second cell as the reference cell for the following examples, the first information field is exemplified by the BWP indicator. In this case, the configuration parameter related to the first information field is the number of BWPs.

When the terminal does not find the set of relationships in the RRC signaling received in all the cells scheduled by the MC-DCI, it may first determine the information indicated by the first information field for the reference cell. For example, if the value of the first information field, BWP indicator, is 11, the information indicated for the second cell (e.g., Cell 0) is that the BWP ID is 4.

Then, the configuration parameter related to the first information field in the RRC signaling received in each first cell can be determined. Subsequently, based on this configuration parameter and the value of the first information field in the MC-DCI, the information indicated by the first information field in the MC-DCI for the first cell can be determined.

If the configuration parameter related to the first information field in the RRC signaling received in the first cell is greater than or equal to the range of values of the information indicated by the first information field for the reference cell, it can be determined that the information indicated by the first information field in the MC-DCI for the first cell is the same as the information indicated for the reference cell. For example, if Cell 1 is the first cell scheduled by the MC-DCI, and the number of BWPs configured in the RRC signaling received in Cell 1 is greater than or equal to 4, it can be determined that the information indicated by the BWP indicator in the MC-DCI for Cell 1 is the same as the information indicated for Cell 0, that is, the information indicated for Cell 1 is also that the BWP ID is 4.

If the configuration parameter related to the first information field in the RRC signaling received in the first cell is less than the value of the information indicated by the first information field for the reference cell, it can be determined that the first information field in the MC-DCI does not provide an indication for the first cell, or it can be determined that the value of the information indicated by the first information field in the MC-DCI for the first cell is equal to the maximum value of the configuration parameter related to the first information field in the RRC signaling received in the first cell. For example, if Cell 2 is the first cell scheduled by the MC-DCI, and the number of BWPs configured in the RRC signaling received in Cell 2 is equal to 2 (with the maximum value also being 2), it can be determined that the BWP indicator in the MC-DCI does not provide an indication for Cell 2, or it can be determined that the information indicated by the BWP indicator in the MC-DCI for Cell 2 is that the BWP ID is 2.

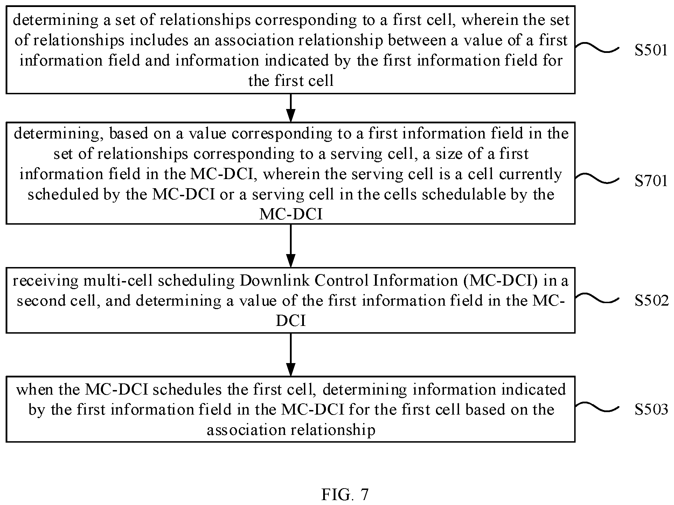

FIG. 7 is a schematic flowchart of another method for determining scheduling illustrated according to embodiments of the present disclosure. As shown in FIG. 6, the method further includes the following steps.

Step S701, determining, based on a value corresponding to a first information field in the set of relationships corresponding to a serving cell, a size (i.e., a number of occupied bits) of a first information field in the MC-DCI, wherein the serving cell is a cell currently scheduled by the MC-DCI (e.g., the first cell) or a serving cell in the cells schedulable by the MC-DCI (e.g., including cells other than the first cell). The cells schedulable by the MC-DCI can be defined in the form of a set.

In one embodiment, for the first information field in MC-DCI, the parsing method employed by the terminal may vary depending on its size. Therefore, the terminal needs to determine the size of the first information field in the MC-DCI received in the second cell to accurately parse it.

Due to the possibility of multiple values for the first information field in the set of relationships indicated by the network device to the terminal, the size of the first information field in the MC-DCI sent by the network device to the terminal needs to be sufficient to indicate all possible values of the first information field in the set of relationships. Therefore, the size of the CIF in the MC-DCI can be determined based on the range of values for the first information field in the set of relationships corresponding to the serving cell. For example, the maximum value of the first information field in the set of relationships corresponding to the serving cell can be determined, and the size of the CIF in the MC-DCI can be determined based on this maximum value. For instance, if the maximum value is 1, the size of the CIF in the MC-DCI can be determined as 1 bit; if the maximum value is 3, the size of the CIF in the MC-DCI can be determined as 2 bits.

In one embodiment, said determining, based on the value of the first information field in the set of relationships received in the serving cell, the size of the first information field in the MC-DCI, includes:
in response to ranges of values of the first information field in the set of relationships corresponding to the serving cell being the same, determining the size of the first information field in the MC-DCI based on the ranges of the values of the first information field of the serving cell;
and/or, in response to ranges of values of the first information field of the set of relationships corresponding to the serving cell being different, determining the size of the first information field in the MC-DCI based on a maximum range of the values of the first information field in the set of relationships corresponding to the serving cell.

In the case where the ranges of the values of the first information field in the set of relationships corresponding to the serving cell are the same, the maximum value of the first information field in the set of the relationships corresponding to the serving cell is also the same, the size of the CIF in the MC-DCI can be determined based on the range of the value corresponding to the first information (e.g., the maximum value of the first information field). For example, if the range is from 0 to 1, the size of the first information field in the MC-DCI can be determined as 1 bit; if the range is from 0 to 3, the size of the first information field in the MC-DCI can be determined as 2 bits.

In the case where the ranges of the values of the first information field in the set of relationships corresponding to the serving cell are different, the maximum values of the first information field in the set of relationships corresponding to the serving cell may also be different. Therefore, it is necessary to determine the maximum range of the values of the first information field in the set of relationships corresponding to the serving cell, and then determine the size of the first information field in the MC-DCI based on this maximum range. For example, if the range of values in the set of relationships corresponding to Cell 1 is from 0 to 1, and the range of values in the set of relationships corresponding to Cell 2 is from 0 to 3, the maximum range is from 0 to 3. Based on this, it can be determined that the size of the CIF in the MC-DCI is 2 bits.

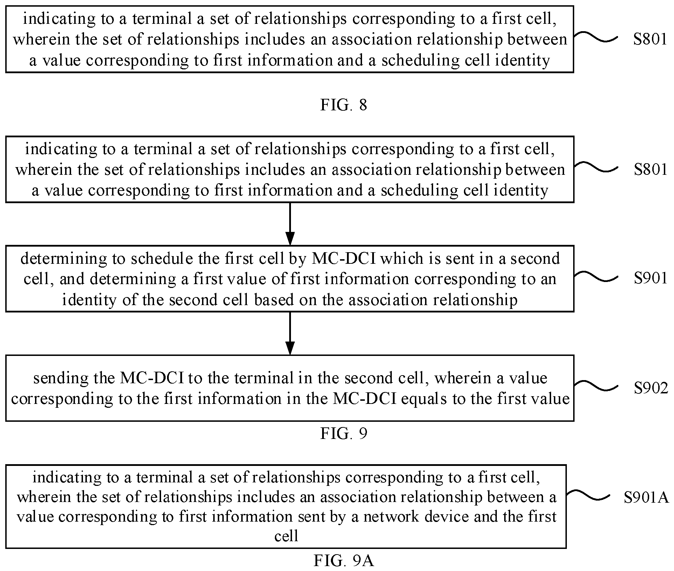

FIG. 8 is a schematic flowchart of a method for indicating an association relationship illustrated according to embodiments of the present disclosure. The method for indicating an association relationship illustrated in this embodiment may be performed by a network device. The network device may communicate with a terminal. The network device includes, but is not limited to, a base station in a communication system such as 4G, 5G, 6G, etc. The terminal includes, but is not limited to, a communication device such as a cell phone, a tablet, a wearable device, a sensor, an IoT device, and the like.

As shown in FIG. 8, the method for indicating an association relationship may include the following steps.

Step S801, indicating to a terminal a set of relationships corresponding to a first cell, wherein the set of relationships includes an association relationship between a value corresponding to first information and a scheduling cell identity.

In embodiments of the present disclosure, the network device may configure a corresponding set of relationships for a serving cell (e.g., a cell that is currently scheduled by the MC-DCI or a cell that can be scheduled by the MC-DCI). After a terminal receives RRC signaling in a first cell among the serving cells, the terminal may determine that the RRC signaling contains the set of relationships, and then it may determine that the set of relationships in the RRC signaling is a set of relationships corresponding to the first cell.

It should be noted that the network device may send the RRC signaling to the terminal in a plurality of first cells, and each first cell may have its own corresponding set of relationships. The sets of relationships corresponding to different first cells may be different or the same, which may be configured as required.

The set of relationships may include association relationships between values corresponding to a plurality of pieces of first information and scheduling cell identities. In the RRC signaling, the value corresponding to the first information may be indicated by the *cif-InScheduingCell* field. The association relationship described above may be carried in the RRC signaling, with types in the RRC signaling including but not limited to "sequence" and "choice", etc. For example, it can be a sequence under an indication value "other" in *schedulingCellInfo,* or sequences under multiple indication values "other" in *schedulingCellInfo.*

The set of relationships between a carrier indicator field and a scheduling cell identity may include an association relationship between a value corresponding to one piece of first information and one scheduling cell identity. For example, a value corresponding to the first information is 1, which corresponds to a scheduling cell identity of 0.

The set of relationships between a carrier indicator field and a scheduling cell identity may include association relationships between values corresponding to a plurality of pieces of first information and one scheduling cell identity. For example, a value corresponding to the first information is 1, which corresponds to a scheduling cell identity of 0; a value corresponding to the first information is 2, which corresponds to a scheduling cell identity of 0.

The set of relationships between a carrier indicator field and a scheduling cell identity may include association relationships between values corresponding to a plurality of pieces of first information and a plurality of scheduling cell identities. For example, a value corresponding to the first information is 1, which corresponds to a scheduling cell identity of 0; a value corresponding to the first information is 3, which corresponds to a scheduling cell identity of 2.

According to embodiments of the present disclosure, the network device can determine an association relationship between a value corresponding to the first information corresponding to each first cell and a scheduling cell identity, and carry the association relationship in a set of relationships to indicate to the terminal. Since the set of relationships may define correspondence relationships between values corresponding to a plurality of pieces of first information and a plurality of scheduling cell identities, and is not limited to a value corresponding to one piece of first information associated with one scheduling cell identity, it is beneficial for the network device to improve the flexibility of scheduling of the first cell by the MC-DCI when it transmits the MC-DCI to the terminal according to this set of relationships. For example, the network device may set a CIF value in the transmitted MC-DCI according to the set of relationships corresponding to the first cell to be scheduled, thereby dynamically adjusting a plurality of cells (cell combinations) scheduled by the MC-DCI.

For example, in the set of relationships, when the value corresponding to the first information is 1, the corresponding scheduling cell identity is 0, and when the value corresponding to the first information is 2, the corresponding scheduling cell identity is 0. In this case, the network device can realize scheduling for the first cell when the value of the CIF in the MC-DCI which is sent in the second cell with the cell identity 0 to the terminal is 1. It can also realize scheduling for the first cell when the value of the CIF in the MC-DCI which is sent in the second cell with the cell identity 0 to the terminal is 2.

For example, in the set of relationships, when the value corresponding to the first information is 1, the corresponding scheduling cell identity is 0, and when the value corresponding to the first information is 3, the corresponding scheduling cell identity is 2. In this case, the network device can realize scheduling for the first cell when the value of the CIF in the MC-DCI which is sent in the second cell with the cell identity 0 to the terminal is 1. It can also realize scheduling for the first cell when the value of the CIF in the MC-DCI which is sent in the second cell with the cell identity 2 to the terminal is 3.

FIG. 9 is a schematic flowchart of another method for indicating an association relationship illustrated according to embodiments of the present disclosure. As shown in FIG. 9, the method further includes the following steps.

Step S901, determining to schedule the first cell by multi-cell scheduling Downlink Control Information (MC-DCI) which is sent in a second cell, and determining a first value of first information corresponding to an identity of the second cell based on the association relationship.

Step S902, sending the MC-DCI to the terminal in the second cell, wherein a value corresponding to the first information in the MC-DCI equals to the first value.

In one embodiment, after the network device indicates the association relationship to the terminal by carrying it in a set of relationships, when it is necessary to schedule the first cell by sending the MC-DCI in the second cell, the first value of the carrier indicator field corresponding to the identity of the second cell can be determined based on the association relationship. Subsequently, in the MC-DCI sent to the terminal in the second cell, the value of the CIF in the MC-DCI can be set equal to the first value. After receiving the MC-DCI in the second cell, the terminal can determine that the first value of the CIF in the MC-DCI corresponds to the same scheduling cell identity as the identity of the second cell in the set of relationships, thereby determining that the first cell is the cell scheduled by the MC-DCI.

In one embodiment, said sending the set of relationships corresponding to the first cell to the terminal includes: sending RRC signaling to the terminal in the first cell, wherein the RRC signaling carries the set of relationships.

The network device may send the RRC signaling to the terminal in the first cell and carry in the RRC signaling the set of relationships corresponding to the first cell. Upon receiving the RRC signaling in the first cell, the terminal, when determining that the RRC signaling carries the set of relationships, may determine the set of relationships in the RRC signaling, as the set of relationships corresponding to the first cell.

In one embodiment, said sending the set of relationships corresponding to the first cell to the terminal includes: sending indication signaling to the terminal in the first cell, wherein the indication signaling carries the set of relationships.

In one embodiment, the indication signaling includes at least one of:
Radio Resource Control (RRC) signaling;
Media Access Control (MAC) signaling; or
Physical Layer signaling.

In one embodiment, the first information includes at least one information field in the downlink control information.

In one embodiment, the at least one information field includes a carrier indicator field.

In one embodiment, when the indication signaling includes the RRC signaling, the method further includes: determining an indication value of scheduling cell information in the RRC signaling; wherein the set of relationships is carried in the RRC signaling in response to the indication value of the scheduling cell information being 'other'.

The cross-carrier scheduling configuration of the RRC signaling sent by the network device to the terminal in the first cell may contain scheduling cell information in which multiple types of data may be contained, such as "choice," "sequence," "boolean," "integer," "float," etc. Among them, the indication value of the "choice" type data may be either "own" or "other." In all embodiments of the present disclosure, the indication value of the scheduling cell information may refer to the indication value of the "choice" type data within the scheduling cell information.

In the case where the indication value of the scheduling cell information is "own," it is indicated that the first cell can be scheduled by the MC-DCI which is sent in the first cell, but not by the MC-DCI sent in the other cell (e.g., the second cell). In this case, the network device has already determined that the first cell is only scheduled by the MC-DCI received by the terminal in the first cell, and thus there is no need for the network device to carry the set of relationships for multi-cell scheduling in the RRC signaling.

In the case where the indication value of the scheduling cell information is "other," it is indicated that the first cell can be scheduled by the MC-DCI which is sent in other cells, e.g., through cross-carrier scheduling. In this case, the terminal still needs to determine in which cell the MC-DCI that schedules the first cell is received by the terminal, and thus the network device can carry the set of relationships in the RRC signaling for the terminal to determine whether the first cell is scheduled by the MC-DCI received in the second cell. The value of the carrier indicator field in the set of relationships may be the value of the carrier indicator field (which may be referred to as *cif-InScheduingCell-r18*) used within the scheduling cell in the scheduling cell information in the RRC signaling.

In one embodiment, the method further includes: determining, based on a value corresponding to a first information field in the set of relationships corresponding to a serving cell, a size of a first information field in the MC-DCI, wherein the serving cell includes a cell currently scheduled by the MC-DCI or a cell schedulable by the MC-DCI. The cells schedulable by the MC-DCI can be defined in the form of a set.

In one embodiment, for the CIF in the MC-DCI, the parsing method employed by the terminal may vary depending on its size. Therefore, the terminal needs to determine the size of the CIF in the MC-DCI received in the second cell to accurately parse it.

Due to the possibility of multiple values for the carrier indicator field in the set of relationships indicated by the network device to the terminal, the size of the CIF in the MC-DCI sent by the network device to the terminal needs to be sufficient to indicate all possible values of the carrier indicator field. Therefore, the size of the CIF in the MC-DCI can be determined based on the values for the carrier indicator field in the set of relationships corresponding to the serving cell. For example, the maximum value of the carrier indicator field in the set of relationships corresponding to the serving cell can be determined, and the size of the carrier indicator field in the MC-DCI can be determined based on this maximum value. For instance, if the maximum value is 7, the size of the CIF in the MC-DCI can be determined as 3 bit; if the maximum value is 3, the size of the CIF in the MC-DCI can be determined as 2 bits.

In one embodiment, said determining, based on the value corresponding to the first information field in the set of relationships corresponding to the serving cell, the size of the first information field in the MC-DCI, includes:
in response to ranges of values corresponding to the first information field in the set of relationships corresponding to the serving cell being the same, determining the size of the first information field in the MC-DCI based on the ranges of the values corresponding to the first information field;
and/or, in response to ranges of values corresponding to the first information field of the set of relationships corresponding to the serving cell being different, determining the size of the first information field in the MC-DCI based on a maximum range of the values corresponding to the first information field in the set of relationships corresponding to the serving cell.

In the case where the ranges of the values of the carrier indicator field in the set of relationships corresponding to the serving cell are the same, the maximum value of the carrier indicator field in the set of the relationships corresponding to the serving cell is also the same, the size of the CIF in the MC-DCI can be determined based on the range of the value of the carrier indicator field (e.g., the maximum value of the carrier indicator field). For example, if the range is from 0 to 3, the size of the CIF in the MC-DCI can be determined as 2 bits; if the range is from 0 to 7, the size of the CIF in the MC-DCI can be determined as 3 bits.

In the case where the ranges of the values of the carrier indicator field in the set of relationships corresponding to the serving cell are different, the maximum values of the carrier indicator field in the set of relationships corresponding to the serving cell may also be different. Therefore, it is necessary to determine the maximum range of the values of the carrier indicator field in the set of relationships corresponding to the serving cell, and then determine the size of the CIF in the MC-DCI based on this maximum range. For example, if the range of values in the set of relationships corresponding to Cell 1 is from 0 to 3, and the range of values in the set of relationships corresponding to Cell 2 is from 0 to 7, the maximum range is from 0 to 7. Based on this, it can be determined that the size of the CIF in the MC-DCI is 3 bits.

FIG. 9A is a schematic flowchart of a method for indicating an association relationship illustrated according to embodiments of the present disclosure. The method for indicating an association relationship illustrated in this embodiment may be performed by a network device. The network device may communicate with a terminal. The network device includes, but is not limited to, a base station in a communication system such as 4G, 5G, 6G, etc. The terminal includes, but is not limited to, a communication device such as a cell phone, a tablet, a wearable device, a sensor, an IoT device, and the like.

As shown in FIG. 9A, the method for indicating an association relationship may include the following steps.

Step 901A, indicating to a terminal a set of relationships corresponding to a first cell, wherein the set of relationships includes an association relationship between the first cell and a value corresponding to first information sent by a network device.

The subsequent embodiments correspond to some of the preceding embodiments and have similar implementations. The implementation methods can be determined by referring to the corresponding embodiments mentioned earlier, and therefore will not be repeated here.

In one embodiment, the method further includes:
determining to schedule the first cell by multi-cell scheduling Downlink Control Information (MC-DCI) which is sent in a second cell, and determining a value of first information corresponding to the first cell based on the association relationship;
wherein the sending module, is further configured to send the first information to the terminal in the second cell, wherein a value corresponding to the first information equals to the first value.

In one embodiment, said determining the set of relationships corresponding to the first cell includes: receiving indication signaling in the first cell; and determining the set of relationships in the indication signaling.

In one embodiment, the indication signaling includes at least one of: Radio Resource Control (RRC) signaling; Media Access Control (MAC) signaling; or Physical layer signaling.

In one embodiment, the first information includes at least one information field in the downlink control information.

In one embodiment, the at least one information field includes a carrier indicator field.

In one embodiment, when the indication signaling includes the RRC signaling, the method further includes: determining an indication value of scheduling cell information in the RRC signaling; wherein the determination of the set of relationships is performed in the RRC signaling in response to the indication value of the scheduling cell information being 'other'.

In one embodiment, the method further includes: determining, based on a value corresponding to a first information field in the set of relationships corresponding to a serving cell, a size of a first information field in the MC-DCI, wherein the serving cell includes a cell that is currently scheduled by the MC-DCI or a cell that is schedulable by the MC-DCI.

In one embodiment, said determining, based on the value of the first information field in the set of relationships received in the serving cell, the size of the first information field in the MC-DCI includes: in response to ranges of values of the first information field in the set of relationships corresponding to the serving cell being the same, determining the size of the first information field in the MC-DCI based on the ranges of the values of the first information field; and/or in response to ranges of values of the first information field in the set of relationships corresponding to the serving cell being different, determining the size of the first information field in the MC-DCI based on a maximum range of the values of the first information field in the set of relationships corresponding to the serving cell.

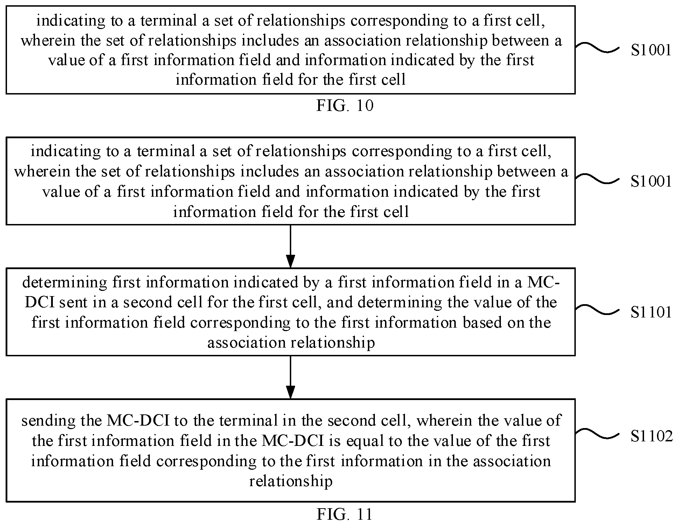

FIG. 10 is a schematic flowchart of a method for indicating an association relationship illustrated according to embodiments of the present disclosure. The method for indicating an association relationship illustrated in this embodiment may be performed by a network device. The network device may communicate with a terminal. The network device includes, but is not limited to, a base station in a communication system such as 4G, 5G, 6G, etc. The terminal includes, but is not limited to, a communication device such as a cell phone, a tablet, a wearable device, a sensor, an IoT device, and the like.

As shown in FIG. 10, the method for indicating an association relationship may include the following steps.

Step S1001, indicating to a terminal a set of relationships corresponding to a first cell, wherein the set of relationships includes an association relationship between a value of a first information field and information indicated by the first information field for the first cell.

In one embodiment, in the case of scheduling a plurality of cells via the MC-DCI, the information field in the MC-DCI also needs to complete indications for each of the plurality of cells. For example, if the MC-DCI is sent to the terminal in the second cell, Cell#0, and the first cell scheduled by the MC-DCI includes Cell#1 and Cell#2, it is necessary to determine the information indicated by the information field in the MC-DCI for Cell#1 and for Cell#2. For example, for the BWP indicator in the MC-DCI, there is a need to determine a BWP identity indicated by the BWP indicator for Cell#1, and a BWP identity indicated for Cell#2.

In embodiments of the present disclosure, a network device may configure a corresponding set of relationships for a serving cell (e.g., a cell currently scheduled by the MC-DCI or a cell that can be scheduled by the MC-DCI). For example, if the terminal determines that the RRC signaling contains the set of relationships after the RRC signaling is received in a first cell among the serving cells, it can determine that the set of relationships in the RRC signaling is the set of relationships corresponding to the first cell.

It should be noted that the terminal can receive the RRC signaling in multiple first cells, and each first cell may have its own corresponding set of relationships. The sets of relationships corresponding to different first cells may be different or the same, which may be configured as required.

The above set of relationships between the first information field and the information indicated by the first information field for the first cell may include an association relationship between the value of the first information field and the information indicated by the first information field for the first cell, which may be carried in the RRC signaling in the form of a table.

The above set of relationships between the first information field and the information indicated by the first information field for the first cell may include an association relationship between a value of one first information field and information indicated by said one first information field for the first cell. For example, the value of the first information field is 1 and the indicated information is a BWP identity of 3.

The above set of relationships between the first information field and the information indicated by the first information field for the first cell may include an association relationship between values of multiple first information fields and information indicated by said multiple first information fields for the first cell. For example, the value of the first information field is 0 and the indicated information is a BWP identity of 2; and the value of the first information field is 1 and the indicated information is a BWP identity of 3.

According to embodiments of the present disclosure, the network device can determine an association relationship between a value of a first information field corresponding to each first cell and the information indicated by the first information field for the first cell, and indicate the association relationship to the terminal, so that the terminal, after receiving the MC-DCI in the second cell, can determine, based on the association relationship, the information indicated by the information field in the MC-DCI for each first cell. Since the set of relationships is allocated and configured for each first cell, the set of relationships corresponding to each first cell may be different, which facilitates flexible adjustment of the information indicated by the MC-DCI for each first cell.

FIG. 11 is a schematic flowchart of another method for indicating an association relationship, illustrated according to embodiments of the present disclosure. As shown in FIG. 11, the method further includes:
Step S1101, determining first information indicated by a first information field in a MC-DCI sent in a second cell for the first cell, and determining the value of the first information field corresponding to the first information based on the association relationship.
Step S1102, sending the MC-DCI to the terminal in the second cell, wherein the value of the first information field in the MC-DCI is equal to the value of the first information field corresponding to the first information in the association relationship.

In one embodiment, after the network device indicates the association relationship to the terminal by carrying it in the set of relationships, when it is necessary to indicate first information for a first cell through a first information field, the value of the first information field corresponding to the first information can be determined based on the association relationship. Subsequently, in the MC-DCI which is sent to the terminal in a second cell, the value of the first information field in the MC-DCI can be set equal to the value of the first information field corresponding to the first information in the association relationship. After receiving the MC-DCI in the second cell, the terminal can determine the first information corresponding to the value of the first information field in the MC-DCI in the set of relationships, thereby determining that the information indicated by the first information field in the MC-DCI for the first cell is the first information.

In one embodiment, the method further includes: determining, based on a value of a first information field in the set of relationships corresponding to a serving cell, a size of a first information field in the MC-DCI, wherein the serving cell includes a cell currently scheduled by the MC-DCI or a cell schedulable by the MC-DCI. The cells schedulable by the MC-DCI can be defined in the form of a set.

In one embodiment, for the first information field in MC-DCI, the parsing method employed by the terminal may vary depending on its size. Therefore, the terminal needs to determine the size of the first information field in the MC-DCI received in the second cell to accurately parse it.

Due to the possibility of multiple values for the first information field in the set of relationships indicated by the network device to the terminal, the size of the first information field in the MC-DCI sent by the network device to the terminal needs to be sufficient to indicate all possible values of the first information field in the set of relationships. Therefore, the size of the CIF in the MC-DCI can be determined based on the range of values for the first information field in the set of relationships corresponding to the serving cell. For example, the maximum value of the first information field in the set of relationships corresponding to the serving cell can be determined, and the size of the carrier indicator field in the MC-DCI can be determined based on this maximum value. For instance, if the maximum value is 1, the size of the CIF in the MC-DCI can be determined as 1 bit; if the maximum value is 3, the size of the CIF in the MC-DCI can be determined as 2 bits.

In one embodiment, said determining, based on the value of the first information field in the set of relationships received in the serving cell, the size of the first information field in the MC-DCI, includes:
in response to ranges of values of the first information field in the set of relationships corresponding to the serving cell being the same, determining the size of the first information field in the MC-DCI based on the ranges of the values of the first information field of the serving cell;
and/or, in response to ranges of values of the first information field of the set of relationships corresponding to the serving cell being different, determining the size of the first information field in the MC-DCI based on a maximum range of the values of the first information field in the set of relationships corresponding to the serving cell.

In the case where the ranges of the values of the first information field in the set of relationships corresponding to the serving cell are the same, the maximum value of the first information field in the set of the relationships corresponding to the serving cell is also the same, the size of the CIF in the MC-DCI can be determined based on the range of the value of the first information field (e.g., the maximum value of the first information field). For example, if the range is from 0 to 1, the size of the first information field in the MC-DCI can be determined as 1 bit; if the range is from 0 to 3, the size of the first information field in the MC-DCI can be determined as 2 bits.

In the case where the ranges of the values of the first information field in the set of relationships corresponding to the serving cell are different, the maximum values of the first information field in the set of relationships corresponding to the serving cell may also be different. Therefore, it is necessary to determine the maximum range of the values of the first information field in the set of relationships corresponding to the serving cell, and then determine the size of the first information field in the MC-DCI based on this maximum range. For example, if the range of values in the set of relationships corresponding to Cell 1 is from 0 to 1, and the range of values in the set of relationships corresponding to Cell 2 is from 0 to 3, the maximum range is from 0 to 3. Based on this, it can be determined that the size of the CIF in the MC-DCI is 2 bits.

In one embodiment, said sending the set of relationships corresponding to the first cell to the terminal includes: sending RRC signaling to the terminal in the first cell, wherein the RRC signaling carries the set of relationships.

The network device can send the RRC signaling to the terminal in the first cell, and carry the set of relationships corresponding to the first cell in the RRC signaling. After receiving the RRC signaling in the first cell, if the terminal determines that the RRC signaling carries the set of relationships, it can determine the set of relationships in the RRC signaling as the set of relationships corresponding to the first cell.

Corresponding to the aforementioned embodiments of the method for scheduling, the method for determining an indication, and the method for indicating an association relationship, this disclosure also provides embodiments of a device for scheduling, a device for determining an indication, and a device for indicating an association relationship.

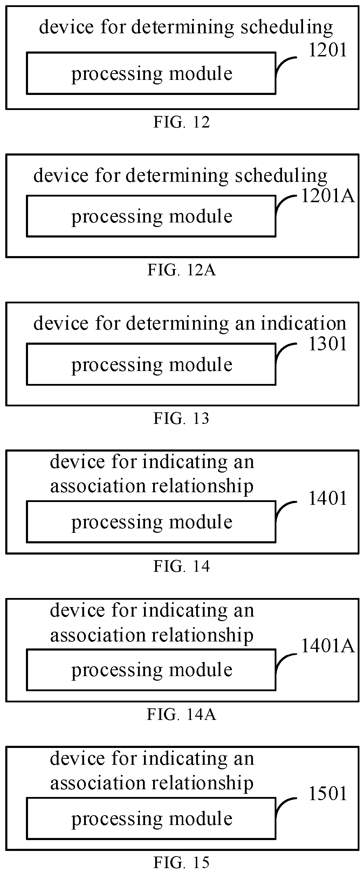

FIG. 12 is a schematic block diagram of a device for determining scheduling illustrated according to embodiments of the present disclosure. The device for determining scheduling illustrated in this embodiment may be a terminal, or a device consisting of modules in a terminal. The terminal includes, but is not limited to a communication device such as a cell phone, a tablet, a wearable device, a sensor, an IoT device, and the like. The terminal may communicate with a network device. The network device includes, but is not limited to a network device in a communication system such as 4G, 5G, 6G, etc. For example, it may be a base station, a core network, etc.

As shown in FIG. 12, the device for determining scheduling may include:
A processing module 1201, configured to determine a set of relationships corresponding to a first cell, wherein the set of relationships comprises an association relationship between a value corresponding to first information and a scheduling cell identity; determine a first value corresponding to the first information received from the second cell; determine a scheduling cell identity corresponding to the first value based on the association relationship; and determine, based on a relationship between the scheduling cell identity corresponding to the first value and an identity of the second cell, whether the first cell is a cell scheduled by multi-cell scheduling Downlink Control Information (MC-DCI) received in the second cell.

In one embodiment, the processing module is configured to, in response to the scheduling cell identity corresponding to the first value being the same as the identity of the second cell, determine that the first cell is the cell scheduled by the MC-DCI; and/or in response to the scheduling cell identity corresponding to the first value being different from the identity of the second cell, determine that the first cell is not the cell scheduled by the MC-DCI.

In one embodiment, the processing module is configured to receive indication signaling in the first cell; and determine the set of relationships in the indication signaling.

In one embodiment, the indication signaling includes at least one of: Radio Resource Control (RRC) signaling; Media Access Control (MAC) signaling; or Physical layer signaling.

In one embodiment, the first information includes at least one information field in Downlink Control Information (DCI).

In one embodiment, the at least one information field includes a Carrier Indicator Field (CIF).

In one embodiment, the indication signaling includes Radio Resource Control (RRC) signaling; and the processing module is further configured to: determine an indication value of scheduling cell information in the RRC signaling, wherein the determination of the set of relationships is performed in the RRC signaling in response to the indication value of the scheduling cell information being 'other'.

In one embodiment, the processing module is further configured to determine, based on a value corresponding to a first information field in a set of relationships corresponding to a serving cell, a size of a first information field in the MC-DCI, wherein the serving cell comprises a cell that is currently scheduled by the MC-DCI or a cell that is schedulable by the MC-DCI.

In one embodiment, the processing module is configured to, in response to ranges of values of the first information field in the set of relationships corresponding to the serving cell being the same, determining the size of the first information field in the MC-DCI based on the ranges of the values of the first information field; and/or in response to ranges of values of the first information field in the set of relationships corresponding to the serving cell being different, determining the size of the first information field in the MC-DCI based on a maximum range of the values of the first information field in the set of relationships corresponding to the serving cell.

FIG. 12A is a schematic block diagram of a device for determining scheduling illustrated according to embodiments of the present disclosure. The device for determining scheduling illustrated in this embodiment may be a terminal, or a device consisting of modules in a terminal. The terminal includes, but is not limited to a communication device such as a cell phone, a tablet, a wearable device, a sensor, an IoT device, and the like. The terminal may communicate with a network device. The network device includes, but is not limited to a network device in a communication system such as 4G, 5G, 6G, etc. For example, it may be a base station, a core network, etc.

As shown in FIG. 12A, the device for determining scheduling may include:
A processing module 1201A, configured to determine a set of relationships corresponding to a first cell, wherein the set of relationships comprises an association relationship between the first cell and a value corresponding to first information sent by a network device; receive first information in a second cell and determine a first value corresponding to the first information received in the second cell; and determine, based on a relationship between the first value and the value of the first information associated with the first cell in the association relationship, whether the first cell is a cell scheduled by multi-cell scheduling Downlink Control Information (MC-DCI) received in the second cell.

In one embodiment, the processing module is configured to, in response to the first value being the same as the value of the first information associated with the first cell in the association relationship, determine that the first cell is the cell scheduled by the MC-DCI; and/or in response to the first value being different from the value of the first information associated with the first cell in the association relationship, determine that the first cell is not the cell scheduled by the MC-DCI.

In one embodiment, the processing module is configured to receive indication signaling in the first cell; and determine the set of relationships in the indication signaling.

In one embodiment, the indication signaling includes at least one of: Radio Resource Control (RRC) signaling; Media Access Control (MAC) signaling; or Physical layer signaling.

In one embodiment, the first information includes at least one information field in Downlink Control Information (DCI).

In one embodiment, the at least one information field includes a Carrier Indicator Field (CIF).

In one embodiment, the indication signaling includes Radio Resource Control (RRC) signaling; and the processing module is further configured to: determine an indication value of scheduling cell information in the RRC signaling, wherein the determination of the set of relationships is performed in the RRC signaling in response to the indication value of the scheduling cell information being 'other'.

In one embodiment, the processing module is further configured to determine, based on a value corresponding to a first information field in a set of relationships corresponding to a serving cell, a size of a first information field in the MC-DCI, wherein the serving cell comprises a cell that is currently scheduled by the MC-DCI or a cell that is schedulable by the MC-DCI.

In one embodiment, the processing module is configured to, in response to ranges of values of the first information field in the set of relationships corresponding to the serving cell being the same, determining the size of the first information field in the MC-DCI based on the ranges of the values of the first information field; and/or in response to ranges of values of the first information field in the set of relationships corresponding to the serving cell being different, determining the size of the first information field in the MC-DCI based on a maximum range of the values of the first information field in the set of relationships corresponding to the serving cell.

FIG. 13 is a schematic block diagram of a device for determining an indication illustrated according to embodiments of the present disclosure. The device for determining an indication illustrated in this embodiment may be a terminal, or a device consisting of modules in a terminal. The terminal includes, but is not limited to a communication device such as a cell phone, a tablet, a wearable device, a sensor, an IoT device, and the like. The terminal may communicate with a network device. The network device includes, but is not limited to a network device in a communication system such as 4G, 5G, 6G, etc. For example, it may be a base station, a core network, etc.

As shown in FIG. 13, the device for determining an indication may include:
A processing module 1301, configured to determine a set of relationships corresponding to a first cell, wherein the set of relationships comprises an association relationship between a value of a first information field and information indicated by the first information field for the first cell; receive multi-cell scheduling Downlink Control Information (MC-DCI) in a second cell, and determine a value of the first information field in the MC-DCI; and when the MC-DCI schedules the first cell, determine information indicated by the first information field in the MC-DCI for the first cell based on the association relationship.

In one embodiment, the processing module is configured to determine a size of the first information field in the MC-DCI based on a value of a first information field in a set of relationships corresponding to a serving cell, wherein the serving cell comprises a cell that is currently scheduled by the MC-DCI or a cell that is schedulable by the MC-DCI.

In one embodiment, the processing module is configured to in response to ranges of values of the first information field in the set of relationships corresponding to the serving cell being the same, determining the size of the first information field in the MC-DCI based on the ranges of the values of the first information field; and/or in response to ranges of values of the first information field in the set of relationships corresponding to the serving cell being different, determining the size of the first information field in the MC-DCI based on a maximum value of the values of the first information field in the set of relationships corresponding to the serving cell.

In one embodiment, the device further includes: a receiving module configured to receive Radio Resource Control (RRC) signaling in the first cell; wherein the processing module is configured to determine the set of relationships in the RRC signaling.

FIG. 14 is a schematic block diagram of a device for indicating an association relationship illustrated according to embodiments of the present disclosure. The device for indicating an association relationship illustrated in this embodiment may be a network device, or a device consisting of modules in a network device. The network device may be in communication with a terminal. The terminal includes, but is not limited to, a communication device such as a cell phone, a tablet, a wearable device, a sensor, an IoT device, and the like. The network device includes, but is not limited to a network device in a communication system such as 4G, 5G, 6G, etc. For example, it may be a base station, a core network, etc.

As shown in FIG. 14, the device for indicating an association relationship may include:
A sending module 1401 configured to indicating to a terminal a set of relationships corresponding to a first cell, wherein the set of relationships comprises an association relationship between a value corresponding to first information and a scheduling cell identity.

In one embodiment, the device further includes: a processing module configured to determine to schedule the first cell by multi-cell scheduling Downlink Control Information (MC-DCI) which is sent in a second cell, and determining a first value of first information corresponding to an identity of the second cell based on the association relationship;
wherein the sending module is further configured to send the first information to the terminal in the second cell, wherein the value corresponding to the first information is equal to the first value.

In one embodiment, the sending module is configured to send indication signaling to the terminal in the first cell, wherein the indication signaling carries the set of relationships.

In one embodiment, the indication signaling comprises at least one of: Radio Resource Control (RRC) signaling; Media Access Control (MAC) signaling; or Physical layer signaling.

In one embodiment, the first information comprises at least one information field in Downlink Control Information (DCI).

In one embodiment, the at least one information field comprises a Carrier Indicator Field (CIF).

In one embodiment, the device further includes: a processing module configured to determine an indication value of scheduling cell information in the RRC signaling; wherein the set of relationships is carried in response to the indication value of the scheduling cell information being 'other'.

In one embodiment, the processing module is further configured to determine, based on a value corresponding to a first information field in a set of relationships corresponding to a serving cell, a size of a first information field in the MC-DCI, wherein the serving cell comprises a cell that is currently scheduled by the MC-DCI or a cell that is schedulable by the MC-DCI.

In one embodiment, the processing module is configured to, in response to ranges of values corresponding to the first information field in the set of relationships corresponding to the serving cell being the same, determine the size of the first information field in the MC-DCI based on the ranges of the values corresponding to the first information field; and/or in response to ranges of values corresponding to the first information field in the set of relationships corresponding to the serving cell being different, determine the size of the first information field in the MC-DCI based on a maximum range of the values corresponding to the first information field in the set of relationships corresponding to the serving cell.

FIG. 14A is a schematic block diagram of a device for indicating an association relationship illustrated according to embodiments of the present disclosure. The device for indicating an association relationship illustrated in this embodiment may be a network device, or a device consisting of modules in a network device. The network device may be in communication with a terminal. The terminal includes, but is not limited to, a communication device such as a cell phone, a tablet, a wearable device, a sensor, an IoT device, and the like. The network device includes, but is not limited to a network device in a communication system such as 4G, 5G, 6G, etc. For example, it may be a base station, a core network, etc.

As shown in FIG. 14A, the device for indicating an association relationship may include:
a sending module configured to indicate to a terminal a set of relationships corresponding to a first cell, wherein the set of relationships comprises an association relationship between a value of a first information field and information indicated by the first information field for the first cell.

In one embodiment, the device further includes: a processing module configured to determine first information indicated for the first cell by a first information field in multi-cell scheduling Downlink Control Information (MC-DCI) which is sent in a second cell, and determine a value of a first information field corresponding to the first information based on the association relationship;
wherein the sending module is further configured to send the first information to the terminal in the second cell, wherein a value of the first information is equal to the first value.

In one embodiment, the sending module is configured to send indication signaling to the terminal in the first cell, wherein the indication signaling carries the set of relationships.

In one embodiment, the indication signaling includes at least one of: Radio Resource Control (RRC) signaling; Media Access Control (MAC) signaling; or Physical Layer signaling.

In one embodiment, the first information includes at least one information field in the downlink control information.

In one embodiment, the at least one information field includes a carrier indicator field.

In one embodiment, when the indication signaling includes the RRC signaling, the device further includes: a processing module configured to determine an indication value of scheduling cell information in the RRC signaling; wherein the set of relationships is carried in the RRC signaling in response to the indication value of the scheduling cell information being 'other'.

In one embodiment, the processing module is further configured to determine, based on a value corresponding to a first information field in a set of relationships corresponding to a serving cell, a size of a first information field in the MC-DCI, wherein the serving cell comprises a cell that is currently scheduled by the MC-DCI or a cell that is schedulable by the MC-DCI.

In one embodiment, the processing module is configured to, in response to ranges of values of the first information field in the set of relationships corresponding to the serving cell being the same, determine the size of the first information field in the MC-DCI based on the ranges of the values of the first information field; and/or in response to ranges of values of the first information field in the set of relationships corresponding to the serving cell being different, determine the size of the first information field in the MC-DCI based on a maximum range of the values of the first information field in the set of relationships corresponding to the serving cell.

FIG. 15 is a schematic block diagram of a device for indicating an association relationship illustrated according to embodiments of the present disclosure. The device for indicating an association relationship illustrated in this embodiment may be a network device, or a device consisting of modules in a network device. The network device may be in communication with a terminal. The terminal includes, but is not limited to, a communication device such as a cell phone, a tablet, a wearable device, a sensor, an IoT device, and the like. The network device includes, but is not limited to a network device in a communication system such as 4G, 5G, 6G, etc. For example, it may be a base station, a core network, etc.

As shown in FIG. 15, the device for indicating an association relationship may include:
a sending module 1501 configured to indicate to a terminal a set of relationships corresponding to a first cell, wherein the set of relationships comprises an association relationship between a value of a first information field and information indicated by the first information field for the first cell.

In one embodiment, the device further includes: a processing module configured to determine first information indicated for the first cell by a first information field in multi-cell scheduling Downlink Control Information (MC-DCI) which is sent in a second cell, and determine a value of a first information field corresponding to the first information based on the association relationship; wherein the sending module is further configured to send the MC-DCI to the terminal in the second cell, wherein a value of the first information field in the MC-DCI is equal to the value of the first information field corresponding to the first information in the association relationship.

In one embodiment, the processing module is further configured to determine, based on a value of a first information field in a set of relationships corresponding to a serving cell, a size of the first information field in the MC-DCI, wherein the serving cell comprises a cell that is currently scheduled by the MC-DCI or a cell that is schedulable by the MC-DCI.

In one embodiment, the processing module is configured to, in response to ranges of values of the first information field in the set of relationships corresponding to the serving cell being the same, determine the size of the first information field in the MC-DCI based on the ranges of the values of the first information field; and/or in response to ranges of values of the first information field in the set of relationships corresponding to the serving cell being different, determine the size of the first information field in the MC-DCI based on a maximum range of the values of the first information field in the set of relationships corresponding to the serving cell.

In one embodiment, the sending module is configured to send Radio Resource Control (RRC) signaling to the terminal in the first cell, wherein the RRC signaling carries the set of relationships.

With respect to the devices in the above embodiments, the specific manner in which each module performs operations has been described in detail in the embodiments of the relevant methods, and will not be described in detail herein.

For the device embodiment, since it corresponds substantially to the method embodiment, it is sufficient to refer to a part of the description of the method embodiment where relevant. The above-described device embodiments are merely schematic, wherein the modules described as illustrated as separated components may or may not be physically separated, and the components shown as modules may or may not be physical modules, i.e., they may be located in one place or may be distributed to a plurality of network modules. Some or all of these modules may be selected to fulfill the purpose of the scheme of the present disclosure according to actual needs. It can be understood and implemented by a person of ordinary skill in the art without creative labor.

Embodiments of the present disclosure also provide a communication device including: a processor, and a memory for storing a computer program. When the computer program is executed by the processor, the method for determining scheduling described in any of the above embodiments, and/or the method for determining an indication described in any of the above embodiments, is implemented.

Embodiments of the present disclosure also provide a communication device including: a processor, and a memory for storing a computer program. When the computer program is executed by the processor, the method for indicating an association relationship described in any of the above embodiment, is implemented.

Embodiments of the present disclosure also provide a computer-readable storage medium for storing a computer program which, when the computer program is executed by a processor, cause the processor to implement the method for determining scheduling as described in any of the above embodiments, and/or the steps in the method for determining an indication as described in any of the above embodiments.

Embodiments of the present disclosure also provide a computer-readable storage medium for storing a computer program which, when the computer program is executed by a processor, causes the processor to implement the steps in the method for indicating an association relationship described in any of the above embodiments.

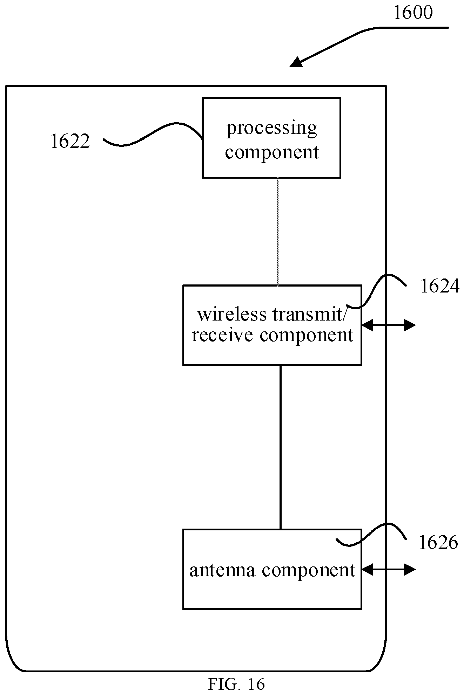

As shown in FIG. 16, FIG. 16 is a schematic block diagram of a device 1600 for indicating an association relationship illustrated according to embodiments of the present disclosure. The device 1600 may be provided as a base station. Referring to FIG. 16, the device 1600 includes a processing component 1622, a wireless transmit/receive component 1624, an antenna component 1626, and a signal processing portion specific to the wireless interface. The processing component 1622 may further include one or more processors. One of the processors in the processing component 1622 may be configured to implement the method for indicating an association relationship described in any of the above embodiments.

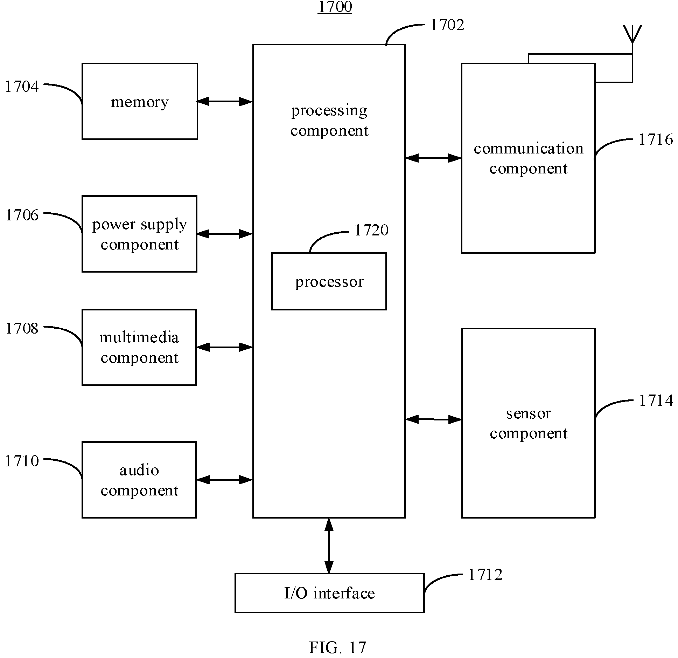

FIG. 17 is a schematic block diagram of a device 1700 for determining scheduling and/or for determining an indication, illustrated according to embodiments of the present disclosure. For example, the device 1700 may be a cell phone, a computer, a digital broadcast terminal, a message transceiver device, a game console, a tablet device, a medical device, a fitness device, a personal digital assistant, and the like.

Referring to FIG. 17, the device 1700 may include one or more of the following components: a processing component 1702, a memory 1704, a power supply component 1706, a multimedia component 1708, an audio component 1710, an input/output (I/O) interface 1712, a sensor component 1714, and a communication component 1716.

The processing component 1702 generally controls the overall operation of the device 1700, such as operations associated with display, telephone calls, data communications, camera operations, and recording operations. The processing component 1702 may include one or more processors 1720 to execute instructions to accomplish all or some of the steps of the method for determining scheduling and/or the method for determining an indication described above. In addition, the processing component 1702 may include one or more modules to facilitate interaction between the processing component 1702 and other components. For example, the processing component 1702 may include a multimedia module to facilitate interaction between the multimedia component 1708 and the processing component 1702.

The memory 1704 is configured to store various types of data to support operation at the device 1700. Examples of such data include instructions for any application or method operating on the device 1700, contact data, phone book data, messages, pictures, videos, and the like. The memory 1704 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory , disks, or CD-ROMs.

The power supply component 1706 provides power to various components of the device 1700. The power supply component 1706 may include a power management system, one or more power sources, and other components associated with generating, managing, and distributing power for the device 1700.

The multimedia component 1708 includes a screen providing an output interface between the device 1700 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes and gestures on the touch panel. The touch sensors may not only sense the boundaries of a touch or swipe action, but also detect the duration and pressure associated with the touch or swipe operation. In some embodiments, the multimedia component 1708 includes a front camera and/or a rear camera. The front camera and/or the rear camera may receive external multimedia data when the device 1700 is in an operational mode, such as a shooting mode or a video mode. Each front camera or rear camera may be a fixed optical lens system or have a focal length and optical zoom capability.

The audio component 1710 is configured to output and/or input audio signals. For example, the audio component 1710 includes a microphone (MIC) configured to receive external audio signals when the device 1700 is in an operational mode, such as a call mode, a recording mode, and a voice recognition mode. The received audio signals may be further stored in memory 1704 or sent via communication component 1716. In some embodiments, the audio component 1710 further includes a speaker for outputting audio signals.

The I/O interface 1712 provides an interface between the processing component 1702 and a peripheral interface module. The peripheral interface module may be a keypad, a click wheel, a button, and the like. These buttons may include, but are not limited to: a home button, a volume button, a start button, and a lock button.

The sensor component 1714 includes one or more sensors for providing an assessment of various aspects of the status of the device 1700. For example, the sensor component 1714 may detect an open/closed state of the device 1700, the relative positioning of components, such as the components being the display and keypad of the device 1700. The sensor component 1714 may also detect a change in the position of the device 1700 or of a component of the device 1700, the presence or absence of user contact with the device 1700, a change in the device 1700's orientation or acceleration/ deceleration and a change in temperature of the device 1700. The sensor component 1714 may include a proximity sensor configured to detect the presence of a nearby object in the absence of any physical contact. The sensor component 1714 may also include an optical sensor, such as a CMOS or CCD image sensor, for use in imaging applications. In some embodiments, the sensor component 1714 may also include an acceleration sensor, a gyroscope sensor, a magnetic sensor, a pressure sensor, or a temperature sensor.

The communication component 1716 is configured to facilitate communication between the device 1700 and other devices by wired or wireless means. The device 1700 may access a wireless network based on a communication standard, such as Wi-Fi, 2G, 3G, 4G (LTE), 5G (NR), or a combination thereof. In an exemplary embodiment, the communication component 1716 receives broadcast signals or broadcast-related information from an external broadcast management system via a broadcast channel. In an exemplary embodiment, the communication component 1716 further includes a near field communication (NFC) module to facilitate short range communication. For example, the NFC module may be implemented based on Radio Frequency Identification (RFID) technology, Infrared Data Association (IrDA) technology, Ultra Wide Band (UWB) technology, Bluetooth^{®} (BT) technology and other technologies.

In exemplary embodiments, the device 1700 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the above-described method for determining scheduling and/or method for determining an indication.

In exemplary embodiments, there is also provided a non-transitory computer-readable storage medium including instructions, such as the memory 1704 including instructions, the instructions being executable by the processor 1720 of the device 1700 to accomplish the method for determining scheduling and/or method for determining an indication. For example, the non-transitory computer-readable storage medium may be ROM, random access memory (RAM), CD-ROM, magnetic tape, floppy disks, and optical data storage devices, among others.

Those skilled in the art, after considering the specification and practicing the disclosure disclosed here, will easily conceive of other embodiments of this disclosure. This disclosure is intended to cover any modifications, uses, or adaptive changes of this disclosure, which follow the general principles of this disclosure and include common knowledge or customary technical means in the technical field that are not explicitly disclosed in this disclosure. The specification and embodiments are to be regarded as exemplary only, and the true scope and spirit of this disclosure are indicated by the following claims.

It should be understood that this disclosure is not limited to the precise structures that have been described above and illustrated in the accompanying drawings, and various modifications and changes may be made without departing from its scope. The scope of this disclosure is limited only by the appended claims.

It should be noted that, in this document, relational terms such as "first" and "second" are used solely to distinguish one entity or operation from another entity or operation, and do not necessarily require or imply any actual relationship or order between these entities or operations. The terms "comprises," "comprising," "includes," "including," or any other variants thereof are intended to cover non-exclusive inclusions, such that a process, method, article, or apparatus that comprises a list of elements does not include only those elements but may also include other elements not explicitly listed or elements inherent to such a process, method, article, or apparatus. In the absence of more specific limitations, elements defined by the phrase "comprising a ..." do not exclude the presence of additional identical elements in the process, method, article, or apparatus that includes the stated elements.

The methods and devices provided by the embodiments of this disclosure have been introduced in detail above. Specific examples have been used to explain the principles and implementation modes of this disclosure. The descriptions of the above embodiments are merely intended to help understand the methods and core ideas of this disclosure. At the same time, for those of ordinary skill in the art, based on the ideas of this disclosure, there will be changes in specific implementation modes and application scopes. In summary, the content of this specification should not be understood as limiting this disclosure.

## Claims

1. A method for determining scheduling, performed by a terminal, the method comprising:
determining a set of relationships corresponding to a first cell, wherein the set of relationships comprises an association relationship between a value corresponding to first information and a scheduling cell identity;
determining a first value corresponding to the first information received from the second cell;
determining a scheduling cell identity corresponding to the first value based on the association relationship; and
determining, based on a relationship between the scheduling cell identity corresponding to the first value and an identity of the second cell, whether the first cell is a cell scheduled by multi-cell scheduling Downlink Control Information, MC-DCI, received in the second cell.

2. The method according to claim 1, wherein determining, based on the relationship between the scheduling cell identity corresponding to the first value and the identity of the second cell, whether the first cell is the cell scheduled by the MC-DCI received in the second cell, comprises:
in response to the scheduling cell identity corresponding to the first value being the same as the identity of the second cell, determining that the first cell is the cell scheduled by the MC-DCI; and/or
in response to the scheduling cell identity corresponding to the first value being different from the identity of the second cell, determining that the first cell is not the cell scheduled by the MC-DCI.

3. The method according to claim 1 or 2, wherein determining the set of relationships corresponding to the first cell comprises:
receiving indication signaling in the first cell; and
determining the set of relationships in the indication signaling.

4. The method according to claim 3, wherein the indication signaling comprises at least one of:
Radio Resource Control, RRC, signaling;
Media Access Control, MAC, signaling; or
Physical layer signaling.

5. The method according to claim 1 or 2, wherein the first information comprises at least one information field in Downlink Control Information, DCI.

6. The method according to claim 5, wherein the at least one information field comprises a Carrier Indicator Field, CIF.

7. The method according to claim 3, wherein the indication signaling comprises Radio Resource Control, RRC, signaling; and wherein the method further comprises:
determining an indication value of scheduling cell information in the RRC signaling,
wherein the determination of the set of relationships is performed in the RRC signaling in response to the indication value of the scheduling cell information being 'other'.

8. The method according to claim 5, further comprising:
determining, based on a value corresponding to a first information field in a set of relationships corresponding to a serving cell, a size of a first information field in the MC-DCI, wherein the serving cell comprises a cell that is currently scheduled by the MC-DCI or a cell that is schedulable by the MC-DCI.

9. The method according to claim 8, wherein determining, based on the value corresponding to the first information field in the set of relationships corresponding to the serving cell, the size of the first information field in the MC-DCI, comprises:
in response to ranges of values of the first information field in the set of relationships corresponding to the serving cell being the same, determining the size of the first information field in the MC-DCI based on the ranges of the values of the first information field; and/or
in response to ranges of values of the first information field in the set of relationships corresponding to the serving cell being different, determining the size of the first information field in the MC-DCI based on a maximum range of the values of the first information field in the set of relationships corresponding to the serving cell.

10. A method for determining scheduling, performed by a terminal, the method comprising:
determining a set of relationships corresponding to a first cell, wherein the set of relationships comprises an association relationship between the first cell and a value corresponding to first information sent by a network device;
receiving first information in a second cell and determining a first value corresponding to the first information received in the second cell; and
determining, based on a relationship between the first value and the value of the first information associated with the first cell in the association relationship, whether the first cell is a cell scheduled by multi-cell scheduling Downlink Control Information, MC-DCI, received in the second cell.

11. A method for determining an indication, performed by a terminal, the method comprising:
determining a set of relationships corresponding to a first cell, wherein the set of relationships comprises an association relationship between a value of a first information field and information indicated by the first information field for the first cell;
receiving multi-cell scheduling Downlink Control Information, MC-DCI, in a second cell, and determining a value of the first information field in the MC-DCI; and
when the MC-DCI schedules the first cell, determining information indicated by the first information field in the MC-DCI for the first cell based on the association relationship.

12. The method according to claim 11, further comprising:
determining a size of the first information field in the MC-DCI based on a value of a first information field in a set of relationships corresponding to a serving cell, wherein the serving cell comprises a cell that is currently scheduled by the MC-DCI or a cell that is schedulable by the MC-DCI.

13. The method according to claim 12, wherein determining the size of the first information field in the MC-DCI based on the value of the first information field in the set of relationships received in the serving cell comprises:
in response to ranges of values of the first information field in the set of relationships corresponding to the serving cell being the same, determining the size of the first information field in the MC-DCI based on the ranges of the values of the first information field; and/or
in response to ranges of values of the first information field in the set of relationships corresponding to the serving cell being different, determining the size of the first information field in the MC-DCI based on a maximum value of the values of the first information field in the set of relationships corresponding to the serving cell.

14. The method according to any one of claims 11 to 13, wherein determining the set of relationships corresponding to the first cell comprises:
receiving Radio Resource Control, RRC, signaling in the first cell; and
determining the set of relationships in the RRC signaling.

15. A method for indicating an association relationship, performed by a network device, the method comprising:
indicating to a terminal a set of relationships corresponding to a first cell, wherein the set of relationships comprises an association relationship between a value corresponding to first information and a scheduling cell identity.

16. The method according to claim 15, further comprising:
determining to schedule the first cell by multi-cell scheduling Downlink Control Information, MC-DCI, which is sent in a second cell, and determining a first value of first information corresponding to an identity of the second cell based on the association relationship; and
sending the first information to the terminal in the second cell, wherein the value corresponding to the first information is equal to the first value.

17. The method according to claim 15 or 16, wherein sending to the terminal the set of relationships corresponding to the first cell comprises:
sending indication signaling to the terminal in the first cell, wherein the indication signaling carries the set of relationships.

18. The method according to claim 17, wherein the indication signaling comprises at least one of:
Radio Resource Control, RRC, signaling;
Media Access Control, MAC, signaling; or
Physical layer signaling.

19. The method according to claim 15 or 16, wherein the first information comprises at least one information field in Downlink Control Information, DCI.

20. The method according to claim 19, wherein the at least one information field comprises a Carrier Indicator Field, CIF.

21. The method according to claim 17, wherein the indication signaling comprises Radio Resource Control, RRC, signaling; and wherein the method further comprises:
determining an indication value of scheduling cell information in the RRC signaling; wherein the set of relationships is carried in response to the indication value of the scheduling cell information being 'other'.

22. The method according to claim 19, further comprising:
determining, based on a value corresponding to a first information field in a set of relationships corresponding to a serving cell, a size of a first information field in the MC-DCI, wherein the serving cell comprises a cell that is currently scheduled by the MC-DCI or a cell that is schedulable by the MC-DCI.

23. The method according to claim 22, wherein determining, based on the value corresponding to the first information field in the set of relationships received in the serving cell, the size of the first information field in the MC-DCI comprises:
in response to ranges of values corresponding to the first information field in the set of relationships corresponding to the serving cell being the same, determining the size of the first information field in the MC-DCI based on the ranges of the values corresponding to the first information field; and/or
in response to ranges of values corresponding to the first information field in the set of relationships corresponding to the serving cell being different, determining the size of the first information field in the MC-DCI based on a maximum range of the values corresponding to the first information field in the set of relationships corresponding to the serving cell.

24. A method for indicating an association relationship, performed by a network device, the method comprising:
indicating to a terminal a set of relationships corresponding to a first cell, wherein the set of relationships comprises an association relationship between the first cell and a value corresponding to first information sent by the network device.

25. A method for indicating an association relationship, performed by a network device, the method comprising:
indicating to a terminal a set of relationships corresponding to a first cell, wherein the set of relationships comprises an association relationship between a value of a first information field and information indicated by the first information field for the first cell.

26. The method according to claim 25, further comprising:
determining first information indicated for the first cell by a first information field in multi-cell scheduling Downlink Control Information, MC-DCI, which is sent in a second cell, and determining a value of a first information field corresponding to the first information based on the association relationship; and
sending the MC-DCI to the terminal in the second cell, wherein a value of the first information field in the MC-DCI is equal to the value of the first information field corresponding to the first information in the association relationship.

27. The method according to claim 26, further comprising:
determining, based on a value of a first information field in a set of relationships corresponding to a serving cell, a size of the first information field in the MC-DCI, wherein the serving cell comprises a cell that is currently scheduled by the MC-DCI or a cell that is schedulable by the MC-DCI.

28. The method according to claim 27, wherein determining, based on the value of the first information field in the set of relationships received in the serving cell, the size of the first information field in the MC-DCI, comprises:
in response to ranges of values of the first information field in the set of relationships corresponding to the serving cell being the same, determining the size of the first information field in the MC-DCI based on the ranges of the values of the first information field; and/or
in response to ranges of values of the first information field in the set of relationships corresponding to the serving cell being different, determining the size of the first information field in the MC-DCI based on a maximum range of the values of the first information field in the set of relationships corresponding to the serving cell.

29. The method according to any one of claims 25 to 28, wherein sending to the terminal the set of relationships corresponding to the first cell comprises:
sending Radio Resource Control, RRC, signaling to the terminal in the first cell, wherein the RRC signaling carries the set of relationships.

30. A device for determining scheduling, comprising:
a processing module configured to: determine a set of relationships corresponding to a first cell, wherein the set of relationships comprises an association relationship between a value corresponding to first information and a scheduling cell identity; determine a first value corresponding to the first information received from the second cell; determine a scheduling cell identity corresponding to the first value based on the association relationship; and determine, based on a relationship between the scheduling cell identity corresponding to the first value and an identity of the second cell, whether the first cell is a cell scheduled by multi-cell scheduling Downlink Control Information, MC-DCI, received in the second cell.

31. A device for determining scheduling, comprising:
a processing module configured to: determine a set of relationships corresponding to a first cell, wherein the set of relationships comprises an association relationship between the first cell and a value corresponding to first information sent by a network device; receive first information in a second cell and determine a first value corresponding to the first information received in the second cell; and determine, based on a relationship between the first value and the value of the first information associated with the first cell in the association relationship, whether the first cell is a cell scheduled by multi-cell scheduling Downlink Control Information, MC-DCI, received in the second cell.

32. A device for determining an indication, comprising:
a processing module configured to determine a set of relationships corresponding to a first cell, wherein the set of relationships comprises an association relationship between a value of a first information field and information indicated by the first information field for the first cell; receive multi-cell scheduling Downlink Control Information, MC-DCI, in a second cell, and determine a value of the first information field in the MC-DCI; and when the MC-DCI schedules the first cell, determine information indicated by the first information field in the MC-DCI for the first cell based on the association relationship.

33. A device for indicating an association relationship, comprising:
a sending module configured to indicate to a terminal a set of relationships corresponding to a first cell, wherein the set of relationships comprises an association relationship between a value corresponding to first information and a scheduling cell identity.

34. A device for indicating an association relationship, comprising:
a sending module configured to indicate to a terminal a set of relationships corresponding to a first cell, wherein the set of relationships comprises an association relationship between a value of a first information field and information indicated by the first information field for the first cell.

35. A device for indicating an association relationship, performed by a network device, the device comprising:
a sending module configured to indicate to a terminal a set of relationships corresponding to a first cell, wherein the set of relationships comprises an association relationship between a value of a first information field and information indicated by the first information field for the first cell.

36. A communication device, comprising:
a processor; and
a memory for storing a computer program;
wherein the computer program, when executed by the processor, causes the processor to perform the method for determining scheduling according to any one of claims 1 to 10, and/or the method for determining an indication according to any one of claims 11 to 14.

37. A communication device, comprising:
a processor; and
a memory for storing a computer program;
wherein the computer program, when executed by the processor, causes the processor to perform the method for indicating an association relationship according to any one of claims 15 to 29.

38. A computer-readable storage medium for storing a computer program that, when executed by a processor, causes the processor to perform the method for determining scheduling according to any one of claims 1 to 10, and/or steps in the method for determining an indication according to any one of claims 11 to 14.

39. A computer-readable storage medium for storing a computer program that, when executed by a processor, causes the processor to perform steps in the method for indicating an association relationship according to any one of claims 15 to 29.
